(19) Europäisches Patentamt / European Patent Office / Office européen des brevets

(11) EP 3 055 348 B1

(12) **EUROPÄISCHE PATENTSCHRIFT**

(45) Veröffentlichungstag und Bekanntmachung des Hinweises auf die Patenterteilung:
**10.04.2019 Patentblatt 2019/15**

(21) Anmeldenummer: **14786632.1**

(22) Anmeldetag: **06.10.2014**

(51) Int Cl.:
***C08J 5/10*** (2006.01) ***B29C 70/50*** (2006.01)
***C08K 5/523*** (2006.01) ***C08K 5/5313*** (2006.01)
***C08K 5/5399*** (2006.01)

(86) Internationale Anmeldenummer:
**PCT/EP2014/071300**

(87) Internationale Veröffentlichungsnummer:
**WO 2015/052114 (16.04.2015 Gazette 2015/15)**

(54) **FASERVERBUNDWERKSTOFF, VERWENDUNG DAFÜR UND VERFAHREN ZU DESSEN HERSTELLUNG**

FIBRE COMPOUND MATERIAL, USE OF SAME AND METHOD FOR ITS PRODUCTION

MATÉRIAU À FIBRES COMPOSITES, SON UTILISATION ET SON PROCÉDÉ DE FABRICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.10.2013 EP 13187763**

(43) Veröffentlichungstag der Anmeldung:
**17.08.2016 Patentblatt 2016/33**

(73) Patentinhaber: **Covestro Deutschland AG**
**51373 Leverkusen (DE)**

(72) Erfinder:
- **GRIMM, Thomas**
**50259 Pulheim (DE)**
- **TASCHNER, Vera**
**40764 Langenfeld (DE)**
- **WENZ, Eckhard**
**50937 Köln (DE)**
- **HÖHNK, Thomas**
**41515 Grevenbroich (DE)**

(74) Vertreter: **Levpat**
**c/o Covestro AG**
**Gebäude 4825**
**51365 Leverkusen (DE)**

(56) Entgegenhaltungen:
**WO-A1-2011/107273 GB-A- 1 485 586**
**US-A1- 2011 152 416**

- **DATABASE WPI Week 200570 Thomson Scientific, London, GB; AN 2005-678539 XP002721725, & JP 2005 239939 A (TORAY IND INC) 8. September 2005 (2005-09-08)**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 055 348 B1

## Beschreibung

Die Erfindung betrifft einen Faserverbundwerkstoff, aufweisend mindestens eine Faserlage aus einem Fasermaterial, die in eine auf einem thermoplastischen Kunststoff basierende Matrix eingebettet ist. Weiterhin betrifft die Erfindung Verwendungen für einen solchen Faserverbundwerkstoff sowie ein Verfahren zur Herstellung eines Faserverbundwerkstoffs.

Faserverbundwerkstoffe sind im Stand der Technik seit langem bekannt, beispielsweise in Blechform als Faserverbundbleche. Faserverbundbleche mit einer auf einem thermoplastischen Kunststoff basierenden Matrix werden im Stand der Technik auch als "Composite Sheets" bezeichnet. Diese Composite Sheets weisen gegenüber extrudierten Kunststoffblechen ohne Faserverstärkung eine höhere Festigkeit und Steifigkeit auf und reichen sogar an die Festigkeit und Steifigkeit metallischer Bleche heran bzw. können diese sogar übertreffen.

Da Composite Sheets gegenüber metallischen Blechen mit vergleichbaren mechanischen Eigenschaften ein erheblich geringeres Gewicht aufweisen, werden Composite Sheets im Stand der Technik vor allem im Automobil- und Flugzeugbau eingesetzt, um Gewichtseinsparungen ohne Abstriche bei den mechanischen Eigenschaften zu erreichen.

Ein Verfahren zur Herstellung eines Composite Sheets ist beispielsweise aus dem Stand der Technik bekannt (z.B. DE 29 48 235 C2).

Bei der Nutzung von Composite Sheets bzw. von Faserverbundwerkstoffen allgemein spielen neben dem Gewicht und den mechanischen Eigenschaften auch Sicherheitsaspekte eine große Rolle, insbesondere in Bezug auf den Brandschutz.

Es sind aus dem Stand der Technik faserverstärkte Composite bekannt, welche gute Brandschutzeigenschaften aufweisen und entsprechend eine UL 94-Klassifikation von V-1 oder besser bei Dicken $\leq$ 2 mm aufweisen. So beschreibt JP 2005239939 A beispielsweise ein faserverstärktes Composit mit einer thermoplastischen Polymermatrix, das als Flammschutzmittel Phosphorverbindungen, beispielsweise roten Phosphor, enthält.

Abhängig vom jeweiligen Anwendungsgebiet müssen die Materialen unterschiedlichen gesetzlichen Vorgaben in Bezug auf ihr Verhalten im Brandfall genügen. Zur Verbesserung der Sicherheit im Brandfall sind diese gesetzlichen Vorgaben zunehmend weiter verschärft worden, insbesondere durch die Norm EN 45545 für den Bereich der Schienenfahrzeuge. Es hat sich gezeigt, dass einige aus dem Stand der Technik bekannte Composite Sheets, die schwächeren Brandschutzvorgaben noch genügten, die verschärften Vorgaben nicht mehr zufriedenstellend erfüllen können. Diese Composite Sheets dürfen daher insbesondere nicht für Anwendungen im Bereich des Schienenverkehrs eingesetzt werden.

Ein auf Duroplaste basierendes flammgeschütztes Faserverbundmaterial ist beispielsweise aus dem Stand der Technik der DE 10 2007 016698 A1 bekannt.

Vor diesem Stand der Technik liegt der vorliegenden Erfindung die Aufgabe zu Grunde, einen Faserverbundwerkstoff mit guten mechanischen Eigenschaften und einer sehr guten Rauchentwicklung bzgl. der Brandschutzerfordernisse der Norm EN 45545-2 zur Verfügung zu stellen.

Diese Aufgabe wird bei einem Faserverbundwerkstoff, aufweisend mindestens eine Faserlage aus einem Fasermaterial, die in eine auf einem thermoplastischen Kunststoff basierende Matrix eingebettet ist, erfindungsgemäß zumindest teilweise dadurch gelöst, dass die Zusammensetzung der Matrix enthält:

A) 60 - 95 Gew.-Teile, bevorzugt 65 - 90 Gew.-Teile, besonders bevorzugt 70 - 86 Gew.-Teile, aromatisches Polycarbonat und/oder aromatisches Polyestercarbonat,

B) 0 bis 15 Gew.-Teile, bevorzugt 1 bis 13 Gew.-Teile, insbesondere 1 bis 7 Gew.-Teile, kautschukmodifiziertes Pfropfpolymerisat,

C) eine der Komponenten C.1, C.2 oder C.3, bevorzugt C.3, in der jeweils nachfolgend genannten Zusammensetzung und Menge:

C.1) 1,0 - 14,5 Gew.-Teile, bevorzugt 1,5 - 9,0 Gew.-Teile, weiter bevorzugt 2,0 - 8,0 Gew.-Teile, mindestens eines cyclischen Phosphazens der Struktur (X),

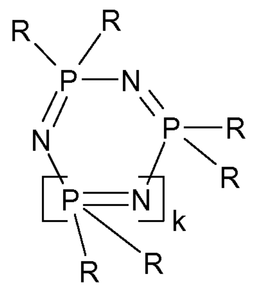

(X),

wobei

R jeweils gleich oder verschieden ist und für einen Aminrest, jeweils gegebenenfalls halogeniertes, vorzugsweise mit Fluor halogeniertes, $C_1$-bis $C_8$-Alkyl, vorzugsweise Methyl, Ethyl, Propyl oder Butyl, $C_1$- bis $C_8$-Alkoxy, vorzugsweise Methoxy, Ethoxy, Propoxy oder Butoxy, jeweils gegebenenfalls durch Alkyl, vorzugsweise $C_1$- bis $C_4$-Alkyl, und/oder Halogen, vorzugsweise Chlor und/oder Brom, substituiertes $C_5$- bis $C_6$-Cycloalkyl, jeweils gegebenenfalls durch Alkyl, vorzugsweise $C_1$- bis $C_4$-Alkyl, und/oder Halogen, vorzugsweise Chlor, Brom, und/oder Hydroxy-substituiertes, $C_6$- bis $C_{20}$-Aryloxy, vorzugsweise Phenoxy, Naphthyloxy, jeweils gegebenenfalls durch Alkyl, vorzugsweise $C_1$- bis $C_4$-Alkyl, und/oder Halogen, vorzugsweise Chlor und/oder Brom, substituiertes $C_7$-bis $C_{12}$-Aralkyl, vorzugsweise Phenyl-$C_1$- bis -$C_4$-alkyl, oder einen Halogen-Rest, vorzugsweise Chlor, oder einen OH-Rest steht;

k für 1 oder eine ganze Zahl von 1 bis 10, vorzugsweise für eine Zahl von 1 bis 8, besonders bevorzugt 1 bis 5, steht;
mit einem Trimerenanteil (k=1) von 50 bis 98 mol.-%, vorzugsweise von 60 bis 98 mol.-%, weiter bevorzugt von 65 bis 95 mol.-%, noch weiter bevorzugt von 70 - 95 mol.-%, besonders bevorzugt von 70 bis 90 mol.-%, und ganz besonders bevorzugt von 70 - 85 mol.-%, bezogen auf die Komponente C.1,

C.2) 0,1 bis 30,0 Gew.-Teile, bevorzugt 1,0 bis 15,0 Gew.-Teile, besonders bevorzugt 7,0 bis 12,0 Gew.-Teile eines Salzes einer Phosphinsäure,

C.3) 0 bis 25,0 Gew.-Teile, bevorzugt 7,0 bis 25,0 Gew.-Teile, besonders bevorzugt 11 bis 20,0 Gew.-Teile eines oligomeren Phosphats, insbesondere eines Bisphenol A-bis(diphenylphosphats),

D) 0 bis 30,0 Gew.-Teile, bevorzugt 0 bis 15,0 Gew.-Teile, insbesondere 0 bis 5,0 Gew.-Teile Talk mit einer mittleren Teilchengröße dso von 0,1 bis 20 $\mu$m,

E) 0,05 bis 5,00 Gew.-Teile, vorzugsweise 0,1 bis 3 Gew.-Teile, besonders bevorzugt 0,1 bis 1,5 Gew.-Teile, insbesondere 0,1 bis 1 Gew.-Teil Antidrippingmittel,

wobei alle Gewichtsteilangaben vorzugsweise in der vorliegenden Anmeldung so normiert sind, dass die Summe der Gewichtsteile aller Komponenten A+B+C+D+E in der Zusammensetzung 100 ergeben.

Im Allgemeinen enthält die Zusammensetzung der Matrix kleiner gleich 15 Gew.-%, bevorzugt kleiner gleich 10 Gew.-% Pfropfpolymerisat B), bezogen auf die Gesamtzusammensetzung. Wenn der Gehalt der Komponente B) kleiner gleich 10 Gew.-%, bezogen auf die Gesamtzusammensetzung, beträgt, enthält die Zusammensetzung der Matrix bevorzugt größer gleich 11 Gew.-%, bezogen auf die Gesamtzusammensetzung, Flammschutzmittel C.3. Die Zusammensetzung der Matrix enthält bevorzugt bis zu 20 Gew.-%, besonders bevorzugt bis zu 17 Gew.-%, insbesondere bis zu 15 Gew.-%, bezogen auf die Gesamtzusammensetzung, Flammschutzmittel gemäß Komponente C.3.

In einer besonders bevorzugten Ausführungsform besteht die Zusammensetzung nur aus den Komponenten A bis E, wobei die Zusammensetzung weiterhin übliche Additive enthalten kann. Bevorzugte Faserverbundwerkstoffe enthalten als Matrixmaterial also Zusammensetzungen, welche keine Polyester enthalten.

In einer bevorzugten Ausführungsform kann die Zusammensetzung weiterhin folgende Bestandteile enthalten:

F) 0 - 15,0 Gew.-Teile, bevorzugt 2,0 - 12,5 Gew.-Teile, weiter bevorzugt von 3,0 - 9,0 Gew.-Teile, besonders bevorzugt 3,0 - 6,0 Gew.-Teile Vinyl(Co)Polymerisat oder Polyalkylenterephthalat,
G) 0 - 15,0 Gew.-Teile, bevorzugt von 0,05 - 15,00 Gew.-Teile, bevorzugt 0,2 - 10,0 Gew.-Teile, besonders bevorzugt 0,4 - 5,0 Gew.-Teile Additive,

wobei alle Gewichtsteilangaben vorzugsweise so normiert sind, dass die Summe der Gewichtsteile aller Komponenten A+B+C+D+E+F+G in der Zusammensetzung 100 ergibt.

In einer bevorzugten Ausführungsform ist die Zusammensetzung frei von anorganischen Flammschutzmitteln und Flammschutzsynergisten, insbesondere Aluminiumhydroxid, Aluminiumoxidhydroxid sowie Arsen- und Antimonoxiden.

Die bevorzugten Ausführungsformen können einzeln stehen oder auch miteinander verknüpft ausgeführt werden.

**Komponente A**

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 007 934).

Die Herstellung aromatischer Polycarbonate erfolgt z. B. durch Umsetzung von Diphenolen mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen, und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I)

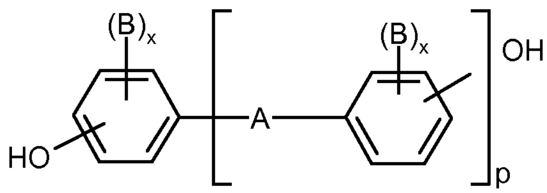

(I),

wobei

A eine Einfachbindung, $C_1$- bis $C_5$-Alkylen, $C_2$- bis $C_5$-Alkyliden, $C_5$- bis $C_6$-Cycloalkyliden, -O-, -SO-, -CO-, -S-, -$SO_2$-, $C_6$- bis $C_{12}$-Arylen, an das weitere aromatische, gegebenenfalls Heteroatome enthaltende, Ringe kondensiert sein können, oder ein Rest der Formel (II) oder (III)

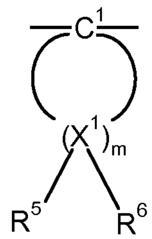

(II)

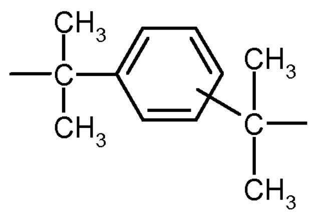

(III),

B jeweils $C_1$- bis $C_{12}$-Alkyl, vorzugsweise Methyl, Halogen, vorzugsweise Chlor und/oder Brom,

x jeweils unabhängig voneinander 0, 1 oder 2,

p 1 oder 0 sind und

| | |
|---|---|
| $R^5$ und $R^6$ | für jedes $X^1$ individuell wählbar, unabhängig voneinander Wasserstoff oder $C_1$- bis $C_6$-Alkyl, vorzugsweise Wasserstoff, Methyl oder Ethyl, |
| $X^1$ | Kohlenstoff und |
| m | eine ganze Zahl von 4 bis 7, bevorzugt 4 oder 5, bedeuten, mit der Maßgabe, dass an mindestens einem Atom $X^1$, $R^5$ und $R^6$ gleichzeitig Alkyl sind. |

Bevorzugte Diphenole sind Hydrochinon, Resorcin, Dihydroxydiphenole, Bis-(hydroxyphenyl)-$C_1$- bis -$C_5$-alkane, Bis-(hydroxyphenyl)-$C_5$- bis -$C_6$-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und $\alpha,\alpha$-Bis-(hydroxyphenyl)-diisopropyl-benzole sowie deren kembromierte und/oder kernchlorierte Derivate.

Besonders bevorzugte Diphenole sind 4,4'-Dihydroxydiphenyl, Bisphenol A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol A). Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenole oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im Allgemeinen zwischen 0,5 Mol%, und 10 Mol%, bezogen auf die Molsumme der jeweils eingesetzten Diphenole.

Die thermoplastischen, aromatischen Polycarbonate haben mittlere Molekulargewichte (Gewichtsmittel $M_w$, gemessen durch GPC (Gelpermeationschromatographie) mit Polycarbonatstandard) von 15.000 bis 80.000 g/mol, vorzugsweise 19.000 bis 32.000 g/mol, besonders bevorzugt 22.000 bis 30.000 g/mol.

Die thermoplastischen, aromatischen Polycarbonate können in bekannter Weise verzweigt sein, und zwar vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen. Bevorzugt werden lineare Polycarbonate, weiter bevorzugt solche auf Basis von Bisphenol A, eingesetzt.

Geeignet sind sowohl Homopolycarbonate als auch Copolycarbonate. Zur Herstellung erfindungsgemäßer Copolycarbonate gemäß Komponente A können auch 1 bis 25 Gew.-%, vorzugsweise 2,5 bis 25 Gew.-%, bezogen auf die Gesamtmenge an einzusetzenden Diphenolen, Polydiorganosiloxane mit Hydroxyaryloxy-Endgruppen eingesetzt werden. Diese sind bekannt (US 3 419 634 A) und nach literaturbekannten Verfahren herstellbar. Ebenfalls geeignet sind Polydiorganosiloxan-haltige Copolycarbonate; die Herstellung der Polydiorganosiloxan-haltigen Copolycarbonate ist beispielsweise in der DE-A 3 334 782 beschrieben.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mitverwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch $C_1$- bis $C_{22}$-Alkylgruppen oder durch Halogenatome substituiert sein können, sowie aliphatische $C_2$- bis $C_{22}$-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Bei der Herstellung von aromatischen Polyestercarbonaten kann zusätzlich eine oder mehrere aromatische Hydroxycarbonsäure eingesetzt werden.

Die aromatischen Polyestercarbonate können sowohl linear als auch in bekannter Weise verzweigt sein (siehe dazu DE-A 2 940 024 und DE-A 3 007 934), wobei lineare Polyestercarbonate bevorzugt sind.

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbon-säuretetrachlorid oder Pyromellithsäuretetrachlorid, in Mengen von 0,01 bis 1,0 Mol% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl] -propan, 2,4-Bis(4-hydroxyphenyl-isopropyl)-phenol, Tetra-(4-hydroxyphenyl)-methan, 2,6-Bis(2-hydroxy-5-methylbenzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytriphenyl)-methyl]-benzol, in Mengen von 0,01 bis 1,0 Mol%, bezogen auf eingesetzte Diphenole, verwendet werden. Phenolische Verzweigungsmittel können mit den Diphenolen vorgelegt werden; Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die thermoplastischen, aromatischen Polycarbonate und Polyestercarbonate können allein oder im beliebigen Gemisch eingesetzt werden.

**Komponente B**

Die Pfropfpolymerisate B umfassen z.B. Pfropfpolymerisate mit kautschukelastischen Eigenschaften, die im Wesentlichen aus mindestens 2 der folgenden Monomere erhältlich sind: Chloropren, Butadien-1,3, Isopren, Styrol, Acrylnitril, Ethylen, Propylen, Vinylacetat und (Meth-)Acrylsäureester mit 1 bis 18 C-Atomen in der Alkoholkomponente; also Polymerisate, wie sie z.B. in "Methoden der Organischen Chemie" (Houben-Weyl), Bd. 14/1, Georg Thieme-Verlag, Stuttgart 1961, S. 393-406 und in C.B. Bucknall, "Toughened Plastics", Appl. Science Publishers, London 1977, beschrieben sind.

Besonders bevorzugte Polymerisate B sind beispielsweise ABS-Polymerisate (Emulsions-, Masse- und Suspensions-ABS), wie sie z.B. in der DE-OS 2 035 390 (=US-PS 3 644 574) oder in der DE-OS 2 248 242 (=GB-PS 1 409 275) bzw. in Ullmanns, Enzyklopädie der Technischen Chemie, Bd. 19 (1980), S. 280 ff. beschrieben sind.

Die Pfropfcopolymerisate B werden durch radikalische Polymerisation, z.B. durch Emulsions-, Suspensions-, Lösungs- oder Massepolymerisation, vorzugsweise durch Emulsions- oder Massepolymerisation, hergestellt.

Bevorzugte Polymerisate B sind partiell vernetzt und besitzen Gelgehalte (gemessen in Toluol) von über 20 Gew.-%, vorzugsweise über 40 Gew.-%, insbesondere über 60 Gew.-%.

Der Gelgehalt wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Bevorzugte Pfropfpolymerisate B umfassen Pfropfpolymerisate aus:

B.1) 5 bis 95, vorzugsweise 30 bis 80 Gew.-Teilen einer Mischung aus

B.1.1) 50 bis 95 Gew.-Teilen Styrol, α-Methylstyrol, methylkernsubstituiertem Styrol, $C_1$- bis $C_8$-Alkylmethacrylat, insbesondere Methylmethacrylat, $C_1$- bis $C_8$-Alkylacrylat, insbesondere Methylacrylat, oder Mischungen dieser Verbindungen und

B.1.2) 5 bis 50 Gew.-Teilen Acrylnitril, Methacrylnitril $C_1$- bis $C_8$-Alkylmethacrylaten, insbesondere Methylmethacrylat, $C_1$- bis $C_8$-Alkylacrylat, insbesondere Methylacrylat, Maleinsäureanhydrid, $C_1$- bis $C_4$-alkyl- bzw. -phenyl-N-substituierte Maleinimide oder Mischungen dieser Verbindungen auf

B.2) 5 bis 95, vorzugsweise 20 bis 70 Gew.-Teilen einer kautschukhaltigen Pfropfgrundlage.

Vorzugsweise hat die Pfropfgrundlage eine Glasübergangstemperatur unter -10°C.

Glasübergangstemperaturen werden, soweit in der vorliegenden Erfindung nicht anders angegeben, mittels dynamischer Differenzkalorimetrie (DSC) gemäß der Norm DIN EN 61006 bei einer Heizrate von 10 K/min mit Definition der Tg als Mittelpunkttemperatur (Tangentenmethode) und Stickstoff als Schutzgas bestimmt.

Besonders bevorzugt ist eine Pfropfgrundlage auf Basis eines Polybutadienkautschuks.

Bevorzugte Pfropfpolymerisate B sind z.B. mit Styrol und/oder Acrylnitril und/oder (Meth-)Acrylsäurealkylestern gepfropfte Polybutadiene, Butadien/Styrol-Copolymerisate und Acrylatkautschuke; d.h. Copolymerisate der in der DE-OS 1 694 173 (= US-PS 3 564 077) beschriebenen Art; mit Acryl- oder Methacrylsäurealkylestern, Vinylacetat, Acrylnitril, Styrol und/oder Alkylstyrolen gepfropfte Polybutadiene, Butadien/Styrol- oder Butadien/Acrylnitril-Copolymerisate, Polyisobutene oder Polyisoprene, wie sie z.B. in der DE-OS 2 348 377 (= US-PS 3 919 353) beschrieben sind.

Besonders bevorzuge Pfropfpolymerisate B sind Pfropfpolymerisate, die durch Pfropfreaktion von

I. 10 bis 70, vorzugsweise 15 bis 50, insbesondere 20 bis 40 Gew.-%, bezogen auf Pfropfprodukt, mindestens eines (Meth-)Acrylsäureesters oder 10 bis 70, vorzugsweise 15 bis 50, insbesondere 20 bis 40 Gew.-% eines Gemisches aus 10 bis 50, vorzugsweise 20 bis 35 Gew.-%, bezogen auf Gemisch, Acrylnitril oder (Meth-)Acrylsäureester, und 50 bis 90, vorzugsweise 65 bis 80 Gew.-%, bezogen auf das Gemisch, Styrol auf

II. 30 bis 90, vorzugsweise 40 bis 85, insbesondere 50 bis 80 Gew.-%, bezogen auf Pfropfprodukt, eines Butadien-Polymerisats mit mindestens 50 Gew.-%, bezogen auf II, Butadienresten als Pfropfgrundlage

erhältlich sind.

Erfindungsgemäß ganz besonders bevorzugt wird als Pfropfpolymer ABS (Acrylnitril-Butadien-Styrol) eingesetzt.

Der Gelanteil dieser Pfropfgrundlage II beträgt vorzugsweise mindestens 70 Gew.-% (in Toluol gemessen), der Pfropfgrad G 0,15 bis 0,55 und der mittlere Teilchendurchmesser $d_{50}$ des Pfropfpolymerisats B 0,05 bis 2, vorzugsweise 0,1 bis 0,6 μm.

(Meth-)Acrylsäureester I sind Ester der Acrylsäure oder Methacrylsäure und einwertiger Alkohole mit 1 bis 18 C-Atomen. Besonders bevorzugt sind Methacrylsäuremethylester, -ethylester und -propylester.

Die Pfropfgrundlage II kann neben Butadienresten bis zu 50 Gew.-%, bezogen auf II, Reste anderer ethylenisch ungesättigter Monomere, wie Styrol, Acrylnitril, Ester der Acryl- oder Methacrylsäure mit 1 bis 4 C-Atomen in der Alkoholkomponente (wie Methylacrylat, Ethylacrylat, Methylmethacrylat, Ethylmethacrylat), Vinylester und/oder Vinylether enthalten. Die bevorzugte Pfropfgrundlage II besteht aus reinem Polybutadien.

Da bei der Pfropfreaktion die Pfropfmonomere bekanntlich nicht unbedingt vollständig auf die Pfropfgrundlage aufgepfropft werden, werden erfindungsgemäß unter Pfropfpolymerisaten B auch solche Produkte verstanden, die durch Polymerisation der Pfropfmonomere in Gegenwart der Pfropfgrundlage gewonnen werden.

Der Pfropfgrad G bezeichnet das Gewichtsverhältnis von aufgepfropften Pfropfmonomeren zur Pfropfgrundlage und ist dimensionslos.

Die mittlere Teilchengröße $d_{50}$ ist der Durchmesser, oberhalb und unterhalb dessen jeweils 50 Gew.-% der Teilchen liegen. Er kann mittels Ultrazentrifugenmessungen (W. Scholtan, H. Lange, Kolloid, Z. und Z. Polymere 250 (1972), 782-796) bestimmt werden.

Weitere bevorzugte Pfropfpolymerisate B sind z.B. auch Pfropfpolymerisate aus

(a) 20 bis 90 Gew.-%, bezogen auf B, Acrylatkautschuk als Pfropfgrundlage und

(b) 10 bis 80 Gew.-%, bezogen auf B, mindestens eines polymerisierbaren, ethylenisch ungesättigten Monomeren, dessen bzw. deren in Abwesenheit von a) entstandenen Homo- bzw. Copolymerisate eine Glasübergangstemperatur über 25°C hätten, als Pfropfmonomere.

Die Pfropfgrundlage aus Acrylatkautschuk hat bevorzugt eine Glasübergangstemperatur von kleiner als -20°C, vorzugsweise kleiner -30°C.

Die Acrylatkautschuke (a) der Polymerisate B sind vorzugsweise Polymerisate aus Acrylsäurealkylestern, gegebenenfalls mit bis zu 40 Gew.-%, bezogen auf (a), anderer polymerisierbarer, ethylenisch ungesättigter Monomere. Zu den bevorzugten polymerisierbaren Acrylsäureestern gehören $C_1$- bis $C_8$-Alkylester, beispielsweise Methyl-, Ethyl-, n-Butyl-, n-Octyl- und 2-Ethylhexylester sowie Mischungen dieser Monomere.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykoldimethacrylat, Allylmethacrylat, mehrfach ungesättigte heterocyclische Verbindungen, wie z.B. Trivinyl- und Triallylcyanurat, polyfunktionelle Vinylverbindungen, wie Di- und Trivinylbenzole, aber auch Triallylphosphat und Diallylphthalat. Bevorzugte vernetzende Monomere sind die cyclischen Monomere Triallylcyanurat, Triallylisocyanurat, Trivinylcyanurat, Triacryloylhexahydro-s-triazin, Triallylbenzole.

Die Menge der vernetzenden Monomere beträgt vorzugsweise 0,02 bis 5, insbesondere 0,05 bis 2 Gew.-%, bezogen auf Pfropfgrundlage (a).

Bei cyclischen vernetzenden Monomeren mit mindestens 3 ethylenisch ungesättigten Gruppen ist es vorteilhaft, die Menge auf unter 1 Gew.-% der Pfropfgrundlage (a) zu beschränken.

Bevorzugte "andere" polymerisierbare, ethylenisch ungesättigte Monomere, die neben den Acrylsäureestern gegebenenfalls zur Herstellung der Pfropfgrundlage (a) dienen können, sind z.B. Acrylnitril, Styrol, α-Methylstyrol, Acrylamide, Vinyl-$C_1$- bis -$C_6$-alkylether, Methylmethacrylat, Butadien. Bevorzugte Acrylatkautschuke als Pfropfgrundlage (a) sind Emulsionspolymerisate, die einen Gelgehalt von mindestens 60 Gew.-% aufweisen.

Weitere geeignete Pfropfgrundlagen sind Silikonkautschuke mit pfropfaktiven Stellen und einem Gelgehalt von

mindestens 40 Gew.-% (gemessen in Dimethylformamid), wie sie in den Offenlegungsschriften DE 37 04 657, DE 37 04 655, DE 36 31 540 und DE 36 31 539 beschrieben werden, sowie Silikon-Acrylat-Kompositkautschuke.

**Komponente C.1**

Phosphazene gemäß Komponente C.1, welche gemäß der vorliegenden Erfindung eingesetzt werden, sind cyclische Phosphazene gemäß Formel (X)

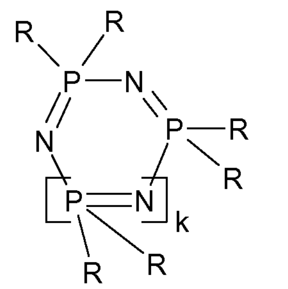

(X),

wobei

R jeweils gleich oder verschieden ist und für

- einen Aminrest,

- jeweils gegebenenfalls halogeniertes, vorzugsweise mit Fluor halogeniertes, weiter bevorzugt monohalogeniertes, $C_1$- bis $C_8$-Alkyl, vorzugsweise Methyl, Ethyl, Propyl oder Butyl,

- $C_1$- bis $C_8$- Alkoxy, vorzugsweise Methoxy, Ethoxy, Propoxy oder Butoxy,

- jeweils gegebenenfalls durch Alkyl, vorzugsweise $C_1$- bis $C_4$-Alkyl, und/oder Halogen, vorzugsweise Chlor und/oder Brom, substituiertes $C_5$- bis $C_6$-Cyclo-alkyl,

- jeweils gegebenenfalls durch Alkyl, vorzugsweise $C_1$- bis $C_4$-Alkyl, und/oder Halogen, vorzugsweise Chlor, Brom, und/oder Hydroxy-substituiertes, $C_6$- bis $C_{20}$-Aryloxy, vorzugsweise Phenoxy, Naphthyloxy,

- jeweils gegebenenfalls durch Alkyl, vorzugsweise $C_1$- bis $C_4$-Alkyl, und/oder Halogen, vorzugsweise Chlor und/oder Brom, substituiertes $C_7$- bis $C_{12}$-Aralkyl, vorzugsweise Phenyl-$C_1$- bis -$C_4$-alkyl, oder

- einen Halogen-Rest, vorzugsweise Chlor oder Fluor, oder

- einen OH-Rest steht,

k für 1 oder eine ganze Zahl von 1 bis 10, vorzugsweise für eine Zahl von 1 bis 8, besonders bevorzugt 1 bis 5, steht,

Bevorzugt sind:

Propoxyphosphazen, Phenoxyphosphazen, Methylphenoxyphosphazen, Aminophosphazen und Fluoralkylphosphazene sowie Phosphazene der folgenden Strukturen:

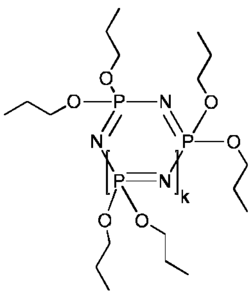

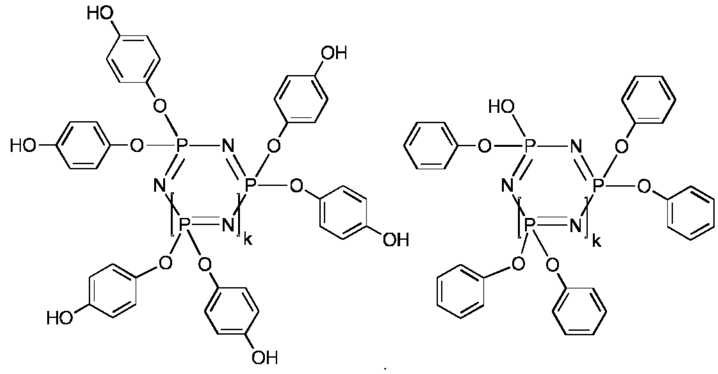

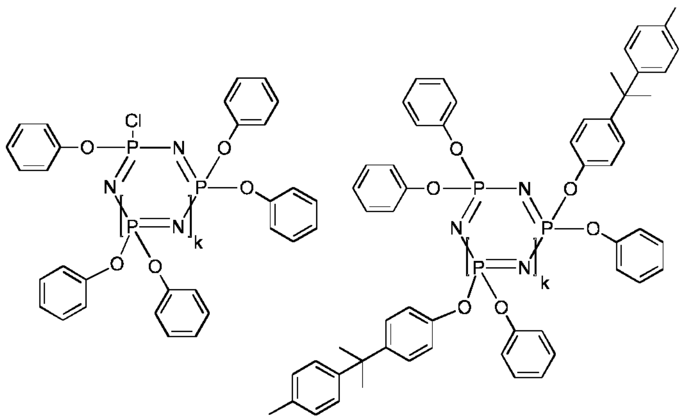

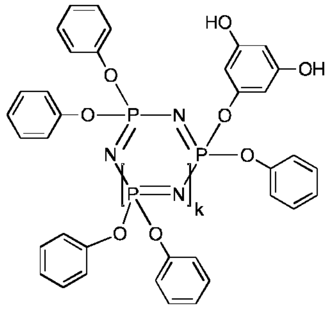

In den oben gezeigten Verbindungen ist k = 1, 2 oder 3.

Besonders bevorzugt ist Phenoxyphosphazen (alle R = Phenoxy) mit einem Anteil an Oligomeren mit k = 1 (C.1-1) von 50 bis 98 mol.-%.

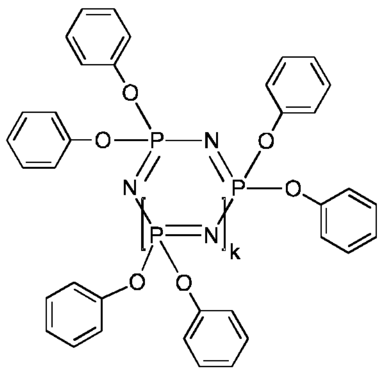

(XI)

Bevorzugt ist der Anteil von am Phosphor Halogen-substituierten Phosphazenen, z. B. aus unvollständig reagierten Ausgangsmaterial, kleiner als 1000 ppm, weiter bevorzugt kleiner als 500 ppm.

Die Phosphazene können allein oder als Mischung eingesetzt werden. Der Rest R kann immer gleich sein oder 2 oder mehr Reste in den Formeln (Ia) und (Ib) können verschieden sein. Bevorzugt sind die Reste R eines Phosphazens identisch.

In einer weiter bevorzugten Ausführungsform werden nur Phosphazene mit gleichem R eingesetzt. In einer bevorzugten Ausführungsform beträgt der Anteil der Tetramere (k=2) (C.1-2) von 2 bis 50 mol-%, bezogen auf die Komponente C.1, weiter bevorzugt von 5 bis 40 mol-%, noch weiter bevorzugt von 10 bis 30 mol-%, besonders bevorzugt von 10 bis 20 mol-%.

In einer bevorzugten Ausführungsform beträgt der Anteil der höheren oligomeren Phosphazene (k=3, 4, 5, 6 und 7) (C.1-3) von 0 bis 30 mol-%, bezogen auf die Komponente C, weiter bevorzugt von 2,5 bis 25 mol-%, noch weiter bevorzugt von 5 bis 20 mol-%, und besonders bevorzugt von 6 - 15 mol-%.

In einer bevorzugten Ausführungsform beträgt der Anteil der Oligomere mit k≥ 8 (C.1-4) von 0 bis 2,0 mol-%, bezogen auf die Komponente C.1, und bevorzugt von 0,10 bis 1,00 mol-%.

In einer weiter bevorzugten Ausführungsform erfüllen die Phosphazene der Komponente C.1 alle drei zuvor genannten Bedingungen hinsichtlich der Anteile (C.1-2 - C.1-4).

Bevorzugt ist die Komponente C.1 ein Phenoxyphosphazen mit einem Trimerenanteil (k=1) von 70 bis 85 mol-%, einem Tetramerenanteil (k=2) von 10 bis 20 mol-%, einem Anteil an höheren oligomeren Phosphazenen (k=3, 4, 5, 6 und 7) von 6 bis 15 mol-% und Phosphazen-Oligomeren mit k≥ 8 von 0,1 bis 1 mol-%, bezogen auf die Komponente C.1.

In einer alternativen Ausführungsform ist n, definiert als der gewichtete arithmetische Wert von k, im Bereich von 1,10 bis 1,75, bevorzugt von 1,15 bis 1,50, weiter bevorzugt von 1,20 bis 1,45, und besonders bevorzugt von 1,20 bis 1,40 (Bereichsgrenzen eingeschlossen).

$$n = \frac{\sum_{i=1}^{max} k_i \cdot x_i}{\sum_{i=1}^{max} x_i}$$

Die Phosphazene und deren Herstellung sind beispielsweise in EP-A 728 811, DE-A 1 961668 und WO 97/40092 A1 beschrieben.

Die Oligomer-Zusammensetzungen in den jeweiligen Blendproben lassen sich auch nach Compoundieren mittels $^{31}$P-NMR nachweisen und quantifizieren (chemische Verschiebung; δ trimer: 6,5 bis 10,0 ppm; δ tetramer: -10 bis -13,5 ppm; δ höhere Oligomere: -16,5 bis -25,0 ppm).

**Komponente C.2**

Unter dem Salz einer Phosphinsäure (Komponente C.2) im erfindungsgemäßen Sinne ist das Salz einer Phosphinsäure mit einem beliebigen Metallkation zu verstehen. Es können auch Mischungen von Salzen eingesetzt werden, die sich in ihrem Metallkation unterscheiden. Bei den Metallkationen handelt es sich um die Kationen der Metalle der 1. Hauptgruppe (Alkalimetalle, vorzugsweise $Li^+$, $Na^+$, $K^+$), der 2. Hauptgruppe (Erdalkalimetalle; vorzugsweise $Mg^{2+}$, $Ca^{2+}$, $Sr^{2+}$, $Ba^{2+}$, besonders bevorzugt $Ca^{2+}$) oder der 3. Hauptgruppe (Elemente der Borgruppe; vorzugsweise $Al^{3+}$) und/oder der 2., 7. oder 8. Nebengruppe (vorzugsweise $Zn^{2+}$, $Mn^{2+}$, $Fe^{2+}$, $Fe^{3+}$) des Periodensystems.

Vorzugsweise wird ein Salz oder eine Mischung von Salzen einer Phosphinsäure der Formel (IV) eingesetzt,

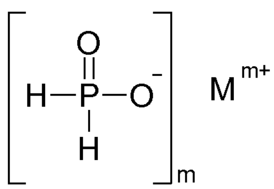

(IV),

worin $M^{m+}$ ein Metallkation der 1. Hauptgruppe (Alkalimetalle; m = 1), 2. Hauptgruppe (Erdalkalimetalle; m = 2) oder der 3. Hauptgruppe (m = 3) oder der 2., 7. oder 8. Nebengruppe (wobei m eine ganze Zahl von 1 bis 6, bevorzugt 1 bis 3 und besonders bevorzugt 2 oder 3 bedeutet) des Periodensystems ist.

Besonders bevorzugt sind in Formel (IV)
für m = 1 die Metallkationen $M^+ = Li^+, Na^+, K^+$,
für m = 2 die Metallkationen $M^{2+} = Mg^{2+}, Ca^{2+}, Sr^{2+}, Ba^{2+}$ und
für m = 3 die Metallkationen $M^{3+} = Al^{3+}$,
höchst bevorzugt sind $Ca^{2+}$ (m = 2) und $Al^{3+}$ (m = 3).

In einer bevorzugten Ausführungsform ist die mittlere Teilchengröße $d_{50}$ des Phosphinsäuresalzes (Komponente C.2) kleiner als 80 μm, vorzugsweise kleiner als 60 μm, besonders bevorzugt ist $d_{50}$ zwischen 10 μm und 55 μm. Die mittlere Teilchengröße $d_{50}$ ist der Durchmesser, oberhalb und unterhalb dessen jeweils 50 Gew.-% der Teilchen liegen. Es können auch Mischungen von Salzen eingesetzt werden, die sich in ihrer mittleren Teilchengröße $d_{50}$ unterscheiden.

Diese Anforderungen an die Teilchengröße $d_{50}$ des Phosphinsäuresalzes sind jeweils mit dem technischen Effekt verbunden, dass die Flammschutzeffizienz des Phosphinsäuresalzes erhöht ist.

Das Phosphinsäuresalz kann entweder alleine oder in Kombination mit anderen phosphorhaltigen Flammschutzmitteln eingesetzt werden. Vorzugsweise sind Phosphinsäuresalz-haltige Zusammensetzungen frei von phosphorhaltigen Flammschutzmitteln, ausgewählt aus der Gruppe der Mono- und oligomeren Phosphor- und Phosphonsäureester, Phosphonatamine und Phosphazene. Diese anderen phosphorhaltigen Flammschutzmittel, wie beispielsweise die Mono- und oligomeren Phosphor- und Phosphonsäureester, besitzen gegenüber den Phosphinsäuresalzen den Nachteil, dass diese die Wärmeformbeständigkeit der Formmassen herabsetzen.

**Komponente C.3**

Als Flammschutzmittel gemäß Komponente C.3 werden oligomere Phosphor- bzw. Phosphonsäureester der allgemeinen Formel (VIII)

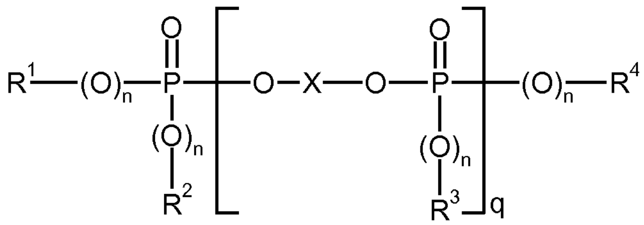

(VIII)

eingesetzt, worin

- $R^1$, $R^2$, $R^3$ und $R^4$ unabhängig voneinander jeweils, gegebenenfalls halogeniertes, $C_1$- bis $C_8$-Alkyl, jeweils gegebenenfalls durch Alkyl, vorzugsweise $C_1$- bis $C_4$-Alkyl, und/oder Halogen, vorzugsweise Chlor, Brom, substituiertes $C_5$- bis $C_6$-Cycloalkyl, $C_6$- bis $C_{20}$-Aryl oder $C_7$- bis $C_{12}$-Aralkyl,
- n - unabhängig voneinander - 0 oder 1,
- q 0 bis 30 und
- X einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten.

Bevorzugt stehen $R^1$, $R^2$, $R^3$ und $R^4$ unabhängig voneinander für $C_1$- bis $C_4$-Alkyl, Phenyl, Naphthyl oder Phenyl-$C_1$- bis -$C_4$-alkyl. Die aromatischen Gruppen $R^1$, $R^2$, $R^3$ und $R^4$ können ihrerseits mit Halogen- und/oder Alkylgruppen, vorzugsweise Chlor, Brom und/oder $C_1$- bis $C_4$-Alkyl, substituiert sein. Besonders bevorzugte Aryl-Reste sind Kresyl, Phenyl, Xylenyl, Propylphenyl oder Butylphenyl sowie die entsprechenden bromierten und chlorierten Derivate davon.

- X in der Formel (VIII) bedeutet bevorzugt einen ein- oder mehrkernigen aromatischen Rest mit 6 bis 30 C-Atomen. Dieser leitet sich bevorzugt von Diphenolen der Formel (I) ab.
- n in der Formel (VIII) kann, unabhängig voneinander, 0 oder 1 sein, vorzugsweise ist n gleich 1.
- q steht für Werte von 0 bis 30, bevorzugt 0,3 bis 20, besonders bevorzugt 0,5 bis 10, insbesondere 0,5 bis 6, noch weiter bevorzugt 1,01 bis 1,6, ganz besonders bevorzugt 1,05 bis 1,6, höchst bevorzugt 1,05 bis 1,2.
- X steht besonders bevorzugt für

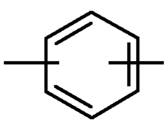 , 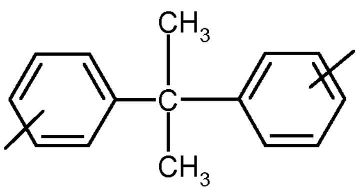 , 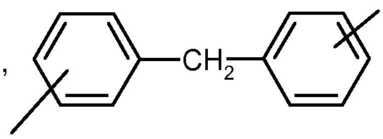 ,

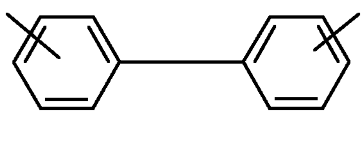 , 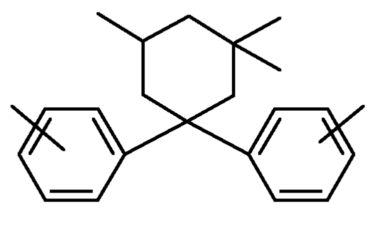

oder deren chlorierte oder bromierte Derivate. insbesondere leitet sich X von Resorcin, Hydrochinon, Bisphenol A oder Diphenylphenol ab. Besonders bevorzugt leitet sich X von Bisphenol A ab.

Als erfindungsgemäße Komponente C.3 können auch Mischungen verschiedener Phosphate eingesetzt werden.

Phosphorverbindungen der Formel (VIII) sind insbesondere Resorcin verbrücktes Oligophosphat und Bisphenol A verbrücktes Oligophosphat. Der Einsatz von oligomeren Phosphorsäureestern der Formel (VIII), die sich vom Bisphenol A ableiten, ist insbesondere bevorzugt.

Höchst bevorzugt als Komponente C.3 ist Bisphenol A basierendes Oligophosphat gemäß Formel (VIIIa),

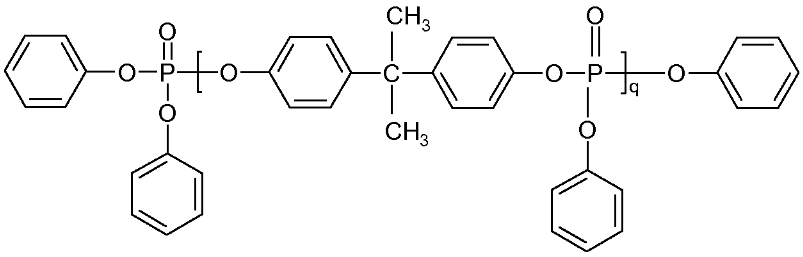

(VIIIa),

wobei q in Formel (VIIIa) für Werte von 1,05 bis 1,2 steht.

Die Phosphorverbindungen gemäß Komponente C.3 sind bekannt (vgl. z.B. EP-A 0 363 608, EP-A 0 640 655) oder lassen sich nach bekannten Methoden in analoger Weise herstellen (z.B. Ullmanns Enzyklopädie der technischen Chemie, Bd. 18, S. 301 ff. 1979; Houben-Weyl, Methoden der organischen Chemie, Bd. 12/1, S. 43; Beilstein Bd. 6, S. 177).

Wenn Mischungen verschiedener Phosphorverbindungen eingesetzt werden und im Fall von oligomeren Phosphorverbindungen handelt es sich bei dem angegebenen q-Wert um den mittleren q-Wert. Der mittlere q-Wert kann bestimmt werden, indem mittels geeigneter Methode (Gaschromatographie (GC), High Pressure Liquid Chromatography (HPLC), Gelpermeationschromatographie (GPC)) die Zusammensetzung der Phosphorverbindung (Molekulargewichtsverteilung) bestimmt wird und daraus die Mittelwerte für q berechnet werden.

Die Flammschutzmittel können allein oder in beliebiger Mischung untereinander oder in Mischung mit anderen Flammschutzmitteln eingesetzt werden. Bevorzugt sind jedoch neben dem eingesetzten Flammschutzmitteln der Gruppe C.1, C.2 und/oder C.3 keine weiteren Flammschutzmittel enthalten.

**Komponente D**

Unter Talk wird ein natürlich vorkommender oder synthetisch hergestellter Talk verstanden.

Reiner Talk hat die chemische Zusammensetzung 3 MgO · 4 $SiO_2$ · $H_2O$ und somit einen MgO-Gehalt von 31,9 Gew.-%, einen $SiO_2$-Gehalt von 63,4 Gew.-% und einen Gehalt an chemisch gebundenem Wasser von 4,8 Gew.-%. Es handelt sich um ein Silikat mit Schichtstruktur.

Natürlich vorkommende Talkmaterialien besitzen im Allgemeinen nicht die oben aufgeführte Idealzusammensetzung, da sie durch partiellen Austausch des Magnesiums durch andere Elemente, durch partiellen Austausch von Silizium durch z.B. Aluminium und/oder durch Verwachsungen mit anderen Mineralien, wie z.B. Dolomit, Magnesit und Chlorit, verunreinigt sind.

Die speziellen Talksorten im erfindungsgemäßen Sinne zeichnen sich durch eine besonders hohe Reinheit aus, gekennzeichnet durch einen MgO-Gehalt von 28 bis 35 Gew.-%, bevorzugt 30 bis 33 Gew.-%, besonders bevorzugt 30,5 bis 32 Gew.-%, und einen $SiO_2$-Gehalt von 55 bis 65 Gew.-%, bevorzugt 58 bis 64 Gew.-%, besonders bevorzugt 60 bis 62,5 Gew.-%. Bevorzugte Talktypen zeichnen sich des Weiteren durch einen $Al_2O_3$-Gehalt von kleiner als 5 Gew.-%, besonders bevorzugt kleiner als 1 Gew.-%, insbesondere kleiner als 0,7 Gew.-%, aus.

Eine kommerziell verfügbare Talktype, die dieser Definition entspricht, ist z.B. Luzenac® A3 der Firma Luzenac Naintsch Mineralwerke GmbH (Graz, Österreich).

Talktypen im nicht erfindungsgemäßen Sinne sind z.B. Luzenac SE-Standard, Luzenac SE-Super, Luzenac SE-Micro sowie Luzenac ST 10, 15, 20, 30 und 60, die allesamt von der Firma Luzenac Naintsch Mineralwerke GmbH vertrieben werden.

Vorteilhaft ist insbesondere der Einsatz des erfindungsgemäßen Talkes in Form von feinvermahlenen Typen mit einer mittleren Teilchengröße dso von 0,1 bis 20 µm, bevorzugt 0,2 bis 10 µm, besonders bevorzugt 1,1 bis 5 µm, ganz besonders bevorzugt 1,15 bis 2,5 µm.

Der Talk kann oberflächenbehandelt, z.B. silanisiert sein, um eine bessere Verträglichkeit mit dem Polymer zu gewährleisten. Im Hinblick auf die Verarbeitung und Herstellung der Formmassen ist auch der Einsatz kompaktierter Talks vorteilhaft.

## Komponente E

Insbesondere wird als Antidrippingmittel Polytetrafluorethylen (PTFE) oder eine PTFE-haltige Zusammensetzung, wie beispielsweise Masterbatche von PTFE mit Styrol- oder Methylmethacrylat enthaltenden Polymeren oder Copolymeren, als Pulver oder als koagulierte Mischung, z.B. mit Komponente B, eingesetzt.

Die als Antidrippingmittel eingesetzten fluorierten Polyolefine sind hochmolekular und besitzen Glasübergangstemperaturen von über -30°C, in der Regel von über 100°C, Fluorgehalte vorzugsweise von 65 bis 76, insbesondere von 70 bis 76 Gew.-%, mittlere Teilchendurchmesser $d_{50}$ von 0,05 bis 1000, vorzugsweise 0,08 bis 20 μm. Im Allgemeinen haben die fluorierten Polyolefine eine Dichte von 1,2 bis 2,3 g/cm$^3$. Bevorzugte fluorierte Polyolefine sind Polytetrafluorethylen, Polyvinylidenfluorid, Tetrafluorethylen/Hexafluorpropylen- und Ethylen/Tetrafluorethylen-Copolymerisate. Die fluorierten Polyolefine sind bekannt (vgl. "Vinyl and Related Polymers" von Schildknecht, John Wiley & Sons, Inc., New York, 1962, Seite 484-494; "Fluorpolymers" von Wall, Wiley-Interscience, John Wiley & Sons, Inc., New York, Band 13, 1970, Seite 623-654; "Modern Plastics Encyclopedia", 1970-1971, Band 47, No. 10 A, Oktober 1970, Mc Graw-Hill, Inc., New York, Seite 134 und 774; "Modern Plastics Encyclopedia", 1975-1976, Oktober 1975, Band 52, Nr. 10 A, Mc Graw-Hill, Inc., New York, Seite 27, 28 und 472 und US-PS 3 671 487, 3 723 373 und 3 838 092).

Sie können nach bekannten Verfahren hergestellt werden, so beispielsweise durch Polymerisation von Tetrafluorethylen in wässrigem Medium mit einem freie Radikale bildenden Katalysator, beispielsweise Natrium-, Kalium- oder Ammoniumperoxidisulfat bei Drucken von 7 bis 71 kg/cm$^2$ und bei Temperaturen von 0 bis 200°C, vorzugsweise bei Temperaturen von 20 bis 100°C. (Nähere Einzelheiten s. z.B. US-A 2 393 967). Je nach Einsatzform kann die Dichte dieser Materialien zwischen 1,2 und 2,3 g/cm$^3$, die mittlere Teilchengröße zwischen 0,05 und 1000 μm liegen.

Die erfindungsgemäß bevorzugten fluorierten Polyolefine haben mittlere Teilchendurchmesser von 0,05 bis 20 μm, vorzugsweise 0,08 bis 10 μm, und eine Dichte von 1,2 bis 1,9 g/cm$^3$.

Geeignete, in Pulverform einsetzbare fluorierte Polyolefine E sind Tetrafluorethylenpolymerisate mit mittleren Teilchendurchmessern von 100 bis 1000 μm und Dichten von 2,0 g/cm$^3$ bis 2,3 g/cm$^3$. Geeignete Tetrafluorethylenpolymerisat-Pulver sind handelsübliche Produkte und werden beispielsweise von der Firma DuPont unter dem Handelsnamen Teflon® angeboten.

Besonders bevorzugte flammgeschützte Zusammensetzungen enthalten als Komponente E neben optionalen weiteren Additiven ein fluoriertes Polyolefin in 0,05 bis 5,0 Gew.-Teilen, vorzugsweise 0,1 bis 2,0 Gew.-Teilen, besonders bevorzugt 0,3 bis 1,0 Gew.-Teilen.

## Komponente F

Die Komponente F umfasst ein oder mehrere thermoplastische Vinyl(Co)Polymerisate oder Polyalkylenterephthalate.

Geeignet als Vinyl(Co)Polymerisate F sind Polymerisate von mindestens einem Monomeren aus der Gruppe der Vinylaromaten, Vinylcyanide (ungesättigte Nitrile), (Meth)Acrylsäure-($C_1$- bis $C_8$)-Alkylester, ungesättigten Carbonsäuren sowie Derivate (wie Anhydride und Imide) ungesättigter Carbonsäuren. Insbesondere geeignet sind (Co)Polymerisate aus

F.1 50 bis 99, vorzugsweise 60 bis 80 Gew.-Teilen Vinylaromaten und/oder kernsubstituierten Vinylaromaten wie Styrol, α-Methylstyrol, p-Methylstyrol, p-Chlorstyrol und/oder (Meth)Acrylsäure-($C_1$- bis $C_8$)-Alkylestern, wie Methylmethacrylat, Ethylmethacrylat, und

F.2 1 bis 50, vorzugsweise 20 bis 40 Gew.-Teilen Vinylcyaniden (ungesättigte Nitrile) wie Acrylnitril und Methacrylnitril und/oder (Meth)Acrylsäure-($C_1$- bis $C_8$)-Alkylestern, wie Methylmethacrylat, n-Butylacrylat, t-Butylacrylat, und/oder ungesättigten Carbonsäuren, wie Maleinsäure, und/oder Derivaten, wie Anhydride und Imide, ungesättigter Carbonsäuren, beispielsweise Maleinsäureanhydrid und N-Phenylmaleinimid.

Die Vinyl(co)polymerisate F sind harzartig, thermoplastisch und kautschukfrei. Besonders bevorzugt ist das Copolymerisat aus F.1 Styrol und F.2 Acrylnitril.

Die (Co)Polymerisate gemäß F sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise mittlere Molekulargewichte $M_w$ (Gewichtsmittel, ermittelt durch Lichtstreuung oder Sedimentation) zwischen 15.000 und 200.000 g/mol, besonders bevorzugt zwischen 100.000 und 150.000 g/mol.

In einer besonders bevorzugten Ausführungsform ist F ein Copolymerisat aus 77 Gew.-% Styrol und 23 Gew.-% Acrylnitril mit einem gewichtsgemittelten Molekulargewicht $M_w$ von 130.000 g/mol.

Ebenfalls als geeignete Komponente F können die Zusammensetzungen erfindungsgemäß ein Polyalkylenterephthalat oder eine Mischung aus zwei oder mehr unterschiedlichen Polyalkylenterephthalaten enthalten.

Polyalkylenterephthalate im Sinne der Erfindung sind Polyalkylenterephthalate, die sich von Terephthalsäure

(oder ihren reaktionsfähigen Derivaten, z.B. Dimethylestern oder Anhydriden) und Alkandiolen, cycloaliphatischen oder araliphatischen Diolen und Mischungen daraus, beispielsweise auf Basis von Propylenglycol, Butandiol, Pentandiol, Hexandiol, 1,2-Cyclohexandiol, 1,4-Cyclohexandiol, 1,3-Cyclohexandiol, und Cyclohexyldimethanol, ableiten, wobei die erfindungsgemäße Diolkomponente mehr als 2 Kohlenstoffatome aufweist. Demgemäß werden als Komponente F bevorzugt Polybutylenterephthalat und/oder Polytrimethylenterephthalat, am meisten bevorzugt Polybutylenterephthalat, eingesetzt.

Die erfindungsgemäßen Polyalkylenterephthalate können als Monomer der Disäure auch bis zu 5 Gew.-% Isophthalsäure enthalten.

Bevorzugte Polyalkylenterephthalate lassen sich aus Terephthalsäure (oder ihren reaktionsfähigen Derivaten) und aliphatischen oder cycloaliphatischen Diolen mit 3 bis 21 C-Atomen nach bekannten Methoden herstellen (Kunststoff-Handbuch, Bd. VIII, S. 695 FF, Karl-Hanser-Verlag, München 1973).

Bevorzugte Polyalkylenterephthalate enthalten mindestens 80, vorzugsweise mindestens 90 Mol-%, bezogen auf die Diolkomponente, Propandiol-1,3- und/oder Butandiol-1,4-Reste.

Die bevorzugten Polyalkylenterephthalate können neben Terephthalsäureresten bis zu 20 Mol-% Reste anderer aromatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure, Cyclohexandicarbonsäure.

Die bevorzugten Polyalkylenterephthalate können neben Propandiol-1,3- bzw. Butandiol-1,4-resten bis zu 20 Mol-% anderer aliphatischer Diole mit 3 bis 12 C-Atomen oder cycloaliphatischer Diole mit 6 bis 21 C-Atomen enthalten, z.B. Reste von 1,3-Propandiol, 2-Ethylpropan-1,3-diol, Neopentylglykol, 1,5-Pentan-diol, 1,6-Hexandiol, Cyclohexan-1,4-dimethanol, 3-Methylpentan-2,4-diol, 2-Methylpentan-2,4-diol, 2,2,4-Trimethylpentan-1,3-diol und 2-Ethylhexan-1,6-diol, 2,2-Diethylpropan-1,3-diol, 2,5-Hexandiol, 1,4-Di-(ß-hydroxyethoxy)-benzol, 2,2-Bis-(4-hydroxycyclohexyl)-propan, 2,4-Dihydroxy-1,1,3,3-tetramethyl-cyclobutan, 2,2-Bis-(3-ß-hydroxyethoxyphenyl)-propan und 2,2-Bis-(4-hydroxypropoxyphenyl)-propan (DE-A 24 07 674, 24 07 776, 27 15 932).

Die Polyalkylenterephthalate können durch Einbau relativ kleiner Mengen 3- oder 4-wertiger Alkohole oder 3- oder 4-basischer Carbonsäuren, wie sie z.B. in der DE-A 19 00 270 und der US-A 3 692 744 beschrieben sind, verzweigt werden. Beispiele für bevorzugte Verzweigungsmittel sind Trimesinsäure, Trimellitsäure, Trimethylolethan und -propan und Pentaerythrit.

Es ist ratsam, nicht mehr als 1 Mol-% des Verzweigungsmittels, bezogen auf die Säurekomponente, zu verwenden.

Besonders bevorzugt sind Polyalkylenterephthalate, die allein aus Terephthalsäure oder deren reaktionsfähigen Derivaten (z.B. deren Dialkylestern wie Dimethylterephthalat) und Propandiol-1,3 und/oder Butandiol-1,4 hergestellt worden sind (Polypropylen- und Polybutylenterephthalat), und Mischungen dieser Polyalkylenterephthalate.

Bevorzugte Polyalkylenterephthalate sind auch Copolyester, die aus mindestens zwei der oben genannten Säurekomponenten und/oder aus mindestens zwei der oben genannten Alkoholkomponenten hergestellt sind, besonders bevorzugte Copolyester sind Poly-(propylenglykol-1,3/butandiol-1,4)-terephthalate.

Die Polyalkylenterephthalate besitzen im Allgemeinen eine intrinsische Viskosität von ca. 0,4 bis 1,5 dl/g, vorzugsweise 0,5 bis 1,3 dl/g, jeweils gemessen in Phenol/o-Dichlorbenzol (1:1 Gew.-Teile) bei 25°C.

In einer alternativen Ausführungsform können die erfindungsgemäß hergestellten Polyester auch im Gemisch mit anderen Polyestern und/oder weiteren Polymeren eingesetzt werden, wobei hier bevorzugt Gemische von Polyalkylenterephthalaten mit anderen Polyestern eingesetzt werden.

**Weitere Additive G**

Die Zusammensetzung kann weitere übliche Polymeradditive wie Flammschutzsynergisten, Gleit- und Entformungsmittel (beispielsweise Pentaerythrittetrastearat), Nukleiermittel, Stabilisatoren (beispielsweise UV/Licht-Stabilisatoren, Thermostabilisatoren, Antioxidantien, Umesterungsinhibitoren, Hydrolyseschutzmittel), Antistatika (beispielsweise Leitruße, Carbonfasern, Carbon Nanotubes sowie organische Antistatika wie Polyalkylenether, Alkylsulfonate oder Polyamidhaltige Polymere) sowie Farbstoffe, Pigmente, Füll- und Verstärkungsstoffe, insbesondere Glasfasern, mineralische Verstärkungsstoffe und Carbonfasern, enthalten. Weiterhin können die Zusammensetzungen anorganische Borverbindungen, bevorzugt Metallsalze der Borate, insbesondere Zinkborat, enthalten.

Als Stabilisatoren werden bevorzugt sterisch gehinderte Phenole und Phosphite oder deren Gemische, wie beispielsweise Irganox© B900 (Ciba Speciality Chemicals), verwendet. Pentaerythrittetrastearat wird bevorzugt als Entformungsmittel verwendet. Weiterhin wird vorzugsweise Ruß als Schwarzpigment (z.B. Blackpearls) zugesetzt.

Besonders bevorzugte Formmassen enthalten als Komponente G neben optionalen weiteren Additiven ein Entformungsmittel, besonders bevorzugt Pentaerythrittetrastearat, in 0,1 bis 1,5 Gew.-Teilen, vorzugsweise 0,2 bis 1,0 Gew.-Teilen, besonders bevorzugt 0,3 bis 0,8 Gew.-Teilen.

Besonders bevorzugte Formmassen enthalten als Komponente G neben optionalen weiteren Additiven mindestens einen Stabilisator, beispielsweise ausgewählt aus der Gruppe der sterisch gehinderten Phenole, Phosphite sowie Mischungen daraus und besonders bevorzugt Irganox® B900, in 0,01 bis 0,5 Gew.-Teilen, vorzugsweise 0,03 bis 0,4 Gew.-Teilen, besonders bevorzugt 0,06 bis 0,3 Gew.-Teilen.

Weiterhin ist die Kombination aus PTFE (Komponente E), Pentaerythrittetrastearat und Irganox B900 mit einem phosphorbasierten Flammschutzmittel als Komponente C) besonders bevorzugt.

Ganz besonders bevorzugte Zusammensetzungen für erfindungsgemäße Faserverbundwerkstoffe bestehen lediglich aus den Komponenten A bis E, und optional mindestens einem Entformungsmittel, insbesondere Pentaerythrittetrastearat, und optional mindestens einem Stabilisator, insbesondere einem Phenol, einem Phosphit oder Mischungen daraus.

Es hat sich herausgestellt, dass mit der erfindungsgemäßen Zusammensetzung, die als Matrixmaterial zum Imprägnieren der Fasern eingesetzt wird, ein Faserverbundwerkstoff zur Verfügung gestellt werden kann, der neben guten mechanischen Eigenschaften in Bezug auf Festigkeit und Steifigkeit auch hohe Brandschutzerfordernisse an die Rauchentwicklung (Ds(4), VOF 4 und Ds(max)) nach EN 45545-2 für den Brandschutz in Schienenfahrzeugen erfüllt.

Zum Erfindungsgedanken gehört somit auch die Verwendung der zuvor beschriebenen Zusammensetzungen zur Herstellung von Faserverbundwerkstoffen, welche die Anforderungen der EN 45545-2 hinsichtlich der Rauchgasentwicklung erfüllen, insbesondere für die Herstellung von Bauteilen für Schienenfahrzeuge.

Weiterhin haben Bauteile, die aus einem erfindungsgemäßen Faserverbundwerkstoff hergestellt werden, in Bezug auf die Flammenausbreitung (CFE) und die Wärmeverbreitung (MARHE) gemäß den Anforderungen der EN 45545 gute Eigenschaften.

Der Faserverbundwerkstoff weist mindestens eine Faserlage aus einem Fasermaterial auf. Unter einer solchen Faserlage wird eine flächige Lage verstanden, welche durch im Wesentlichen in einer Fläche angeordnete Fasern gebildet wird. Die Fasern können durch ihre Lage zueinander miteinander verbunden sein, beispielsweise durch eine gewebeartige Anordnung der Fasern. Weiterhin kann die Faserlage auch einen Anteil Harz oder einen anderen Kleber aufweisen, um die Fasern miteinander zu verbinden. Die Fasern können alternativ auch unverbunden sein. Hierunter wird verstanden, dass die Fasern ohne Aufwendung einer nennenswerten Kraft voneinander gelöst werden können. Die Faserlage kann auch eine Kombination von verbundenen und unverbundenen Fasern aufweisen.

Die mindestens eine Faserlage ist in eine auf einem thermoplastischen Kunststoff basierende Matrix eingebettet. Hierunter wird verstanden, dass die Faserlage zumindest einseitig, vorzugsweise beidseitig von einem thermoplastischen Kunststoff umgeben ist. Der Rand der Matrix aus dem thermoplastischen Kunststoff bildet insbesondere die äußere Oberfläche des aus dem Faserverbundwerkstoff bestehenden Bauteils oder Halbzeugs.

Die Zahl der Faserlagen ist bei dem Faserverbundwerkstoff grundsätzlich nicht beschränkt. Es können daher auch zwei oder mehr Faserlagen übereinander angeordnet werden. Zwei übereinanderliegende Faserlagen können dabei jeweils einzeln in die Matrix eingebettet sein, so dass sie jeweils beidseitig von der Matrix umgeben sind. Weiterhin können zwei oder mehr Faserlagen auch unmittelbar übereinander liegen, so dass ihre Gesamtheit von der Matrix umgeben wird. In diesem Fall können diese zwei oder mehr Faserlagen auch als eine dicke Faserlage angesehen werden.

Bei einer Ausführungsform des Faserverbundwerkstoffs ist die Faserlage als unidirektionale Faserlage, als Gewebe- oder Gelegelage, als Gestrick, Gewirk oder Geflecht, oder als Langfaser in Form von Wirrfasermatten oder Vliesen oder als Kombination daraus ausgebildet. In Versuchen wurden mit unidirektionalen Faserlagen, Geweben und Gelegen die besten Eigenschaften der Faserverbundwerkstoffe erreicht.

Der chemische Aufbau der Fasern (Verstärkungsfasern) des Fasermaterials kann von der unterschiedlichsten Art sein. Vorzugsweise besitzen die Verstärkungsfasern einen höheren Erweichungs- bzw. Schmelzpunkt als die jeweils vorliegende Thermoplastmatrix. Beispiele für Fasermaterialien sind anorganische Materialien wie silikatische und nichtsilikatische Gläser der verschiedensten Art, Kohlenstoff, Basalt, Bor, Siliciumcarbid, Metalle, Metalllegierungen, Metalloxide, Metallnitride, Metallcarbide und Silikate, sowie organische Materialien wie natürliche und synthetische Polymere, beispielsweise Polyacrylnitrile, Polyester, ultrahochgereckte Polyolefinfasern, Polyamide, Polyimide, Aramide, Liquid-crystal-Polymere, Polyphenylensulfide, Polyetherketone, Polyetheretherketone, Polyetherimide, Baumwolle und Cellulose. Bevorzugt sind hochschmelzende Materialien, beispielsweise Gläser, Kohlenstoff, Aramide, Basalt, Liquid-crystal-Polymere, Polyphenylensulfide, Polyetherketone, Polyetheretherketone und Polyetherimide. Besonders bevorzugte Verstärkungsfasern sind Glasfasern und Kohlefasern.

Bei einer Ausführungsform des Faserverbundwerkstoffs liegt der Volumengehalt des Fasermaterials am Gesamtvolumen des Faserverbundwerkstoffs im Bereich 30 bis 60 Vol.-%, bevorzugt im Bereich 40 bis 55 Vol.-%.

Bei einer Ausführungsform des Faserverbundwerkstoffs liegt der Faserverbundwerkstoff in Form eines Faserverbundblechs vor. Die vorliegende Offenbarung betrifft demnach insbesondere auch ein Faserverbundblech, das im Wesentlichen aus dem zuvor beschriebenen Faserverbundwerkstoff besteht.

Bei einer Ausführungsform des Faserverbundwerkstoffs weist das Faserverbundblech eine Dicke im Bereich von 0,5 bis 3 mm, bevorzugt von 1 bis 2 mm auf. Bei diesen Dicken wurden besonders gute Brandeigenschaften festgestellt.

Bei einer Ausführungsform des Faserverbundwerkstoffs weist der Faserverbundwerkstoff folgende Eigenschaften auf, und zwar insbesondere dann, wenn der Faserverbundwerkstoff in Form eines Faserverbundblechs vorliegt:

| | |
|---|---|
| Ds(4) nach ISO 5659-2: | < 300, |
| VOF 4 nach ISO 5659-2: | < 600 und |
| Ds(max) nach ISO 5659-2: | < 600. |

Die Werte **Ds(4)**, **VOF 4**, **Ds(max)** für die Rauchentwicklung nach ISO 5659-2 sind bei einer Bestrahlungsstärke von 50 $kW/m^2$ und ohne Zündflamme zu bestimmen (siehe Beispiel).

Für die Herstellung von endlosfaserverstärkten thermoplastischen Halbzeugen (Composite Sheets) können verschiedene Herstellungsmethoden eingesetzt werden. Dabei kann zunächst grundlegend unterschieden werden, ob das Composite Sheet zum Beispiel aus unidirektionalen Faserlagen, Gewebelagen, Wirrfaserlagen oder aus Kombinationen daraus besteht, wobei unidirektionale Fasern entweder in Form eines Halbzeugs (z.B. Gelege) oder direkt als reiner Faserstrang in das Composite Sheet eingebracht werden kann. Bei letzterem Ansatz werden die Faserstränge in der Regel zunächst einlagig mit dem thermoplastischen Harz imprägniert, um anschließend zu einem mehrlagigen System (Laminat) verpresst zu werden, wobei es hier verschiedene Methoden der Imprägnierung gibt. Sofern das Composite Sheet aus Faserhalbzeugen (Gewebe, Gelege, Wirrfaser etc.) herstellt wird, zeigt der Stand der Technik ebenfalls verschiedene Möglichkeiten auf, wie Faser und Matrix zusammengebracht werden können. Gängige Methoden sind zum Bespiel das Verfahren mithilfe von Pulver Prepregs oder das so genannte Film Stacking Verfahren. Das Film Stacking Verfahren kann bevorzugt für die Herstellung der zuvor beschriebenen Faserverbundwerkstoffe eingesetzt werden. Hierbei werden abwechselnd Folien und Gewebelagen aufeinander geschichtet, wobei Flächengewicht des Gewebes und Dicke der Folien beispielsweise so abgestimmt sein können, dass man auf einen resultierenden Faservolumengehalt von beispielsweise 50 Vol.-% im fertigen Composite Sheet kommt.

Die zuvor beschriebene Aufgabe wird weiter erfindungsgemäß zumindest teilweise gelöst durch die Verwendung eines der zuvor beschriebenen Faserverbundwerkstoffe für ein Bauteil für ein Schienenfahrzeug, insbesondere für ein Schienenfahrzeug für den Personentransport.

Es hat sich herausgestellt, dass die zuvor beschriebenen Faserverbundwerkstoffe in Bezug auf die für Schienenfahrzeuge wichtigen Eigenschaften im Brandfall gute Ergebnisse zeigen. Daher sind diese Faserverbundwerkstoffe besonders für den Einsatz in Schienenfahrzeugen geeignet. Insbesondere eignen sich diese Faserverbundwerkstoffe für den Einsatz in Schienenfahrzeugen für die Personenbeförderung, da der Brandschutz für die Sicherheit der beförderten Personen besonders wichtig und die Anforderungen an die in solchen Schienenfahrzeugen verwendeten Werkstoffe entsprechend hoch sind. Die in der Schienennorm festgesetzte Rauchgasentwicklung gemäß EN 45545 2 stellt für thermoplastische Werkstoffe eine große Hürde dar.

Es hat sich gezeigt, dass der zuvor beschriebene Faserverbundwerkstoff eine sehr geringe Rauchentwicklung zeigt und die Anforderungen an die Rauchgasentwicklung gemäß EN 45545 2 erfüllt. Daher ist der Faserverbundwerkstoff auch besonders für solche Bauteile geeignet, die diese Erfordernisse zu erfüllen haben, wie zum Beispiel Struktur- und Kleidungselemente des Fahrzeuginnenbereichs (Wände, Deckenverkleidungen, Türen, Fenster etc.), Gepäckablagen, Führerpult, Tische, Schall- und Dämmstoffe, vertikale Oberflächen der Fahrzeugaußenhaut, Außenflächen des Unterbaus, Leuchtenabdeckungen, Lichtdiffuser etc. Faserverbundwerkstoffe der vorliegenden Erfindung können weiterhin verwendet werden zur Herstellung von dünnwandigen Formteilen (z.B. Datentechnik-Gehäuseteile, TV-Gehäuse, Notebooks), wo besonders hohe Ansprüche an Kerbschlagzähigkeit, Fließnahtfestigkeit, Flammwidrigkeit und Oberflächenqualität der eingesetzten Materialien gestellt werden, weiterhin zur Herstellung von Gehäuseteilen z.B. für Haushaltsgeräte, Büromaschinen, wie Monitore oder Drucker, oder Abdeckplatten für den Bausektor und Teile für den Kfz-Sektor oder Teile für den Elektrosektor.

Die zuvor beschriebene Aufgabe wird weiterhin zumindest teilweise gelöst durch ein Verfahren zur Herstellung des zuvor beschriebenen Faserverbundwerkstoffs, bei dem aus mindestens einer Faserlage aus einem Fasermaterial und aus auf beiden Seiten der Faserlage angeordneten Kunststofflagen aus mindestens einer Kunststofffolie eine Lagenstruktur übereinander angeordneter Lagen gebildet wird und bei dem die Lagenstruktur unter Druck- und Wärmeeinwirkung zu einem Faserverbundwerkstoff gepresst wird, wobei die Kunststofffolie eine der Matrix des zuvor beschriebenen Faserverbundwerkstoffs entsprechende Zusammensetzung aufweist. Dieses Verfahren kann auch als "Film-Stacking"-Verfahren bezeichnet werden.

Bei dem "Film-Stacking-Verfahren" wird aus mindestens einer Faserlage aus einem Fasermaterial und aus auf beiden Seiten der Faserlage angeordneten Kunststofflagen aus mindestens einer Kunststofffolie eine Lagenstruktur übereinander angeordneter Lagen gebildet. Hierzu können beispielsweise eine oder mehrere bandförmige Faserlagen sowie bandförmige Kunststofffolien von Haspeln einer Abwickelstation abgewickelt und entsprechend der vorgesehenen Anordnung zu einer Lagenstruktur zusammengefasst werden. Beispielsweise kann eine Lagenstruktur mit zwei Faserlagen und drei Kunststofflagen hergestellt werden, wobei die verschiedenartigen Lagen jeweils abwechselnd übereinander angeordnet werden.

Bei dem Verfahren wird die Lagenstruktur unter Druck- und Wärmeeinwirkung zu einem Faserverbundwerkstoff gepresst. Dieser Verfahrensschritt kann in kontinuierlicher, in semikontinuierlicher oder in diskontinuierlicher Prozessführung erfolgen. Beispielsweise können für eine kontinuierliche Prozessführung eine beheizbare Bandpresse, für eine semi-kontinuierliche Prozessführung eine Intervallheißpresse oder für eine diskontinuierliche Prozessführung eine einfache beheizbare Presse verwendet werden. Die kontinuierliche oder semi-kontinuierliche Prozessführung ermöglicht gegenüber der diskontinuierlichen Prozessführung höhere Durchsätze.

Weitere Verfahren zur Herstellung des zuvor beschriebenen Faserverbundstoffs werden im Folgenden beschrieben:

Für die Herstellung der zuvor beschriebenen Faserverbundwerkstoffe (Composite Sheets) auf Basis der Prepreg-Technologie kann ein Mehrstufenprozess mit folgenden Prozessschritten zum Einsatz kommen:

- Vermahlen eines oder mehrerer Granulate(s) mit der gewünschten Zusammensetzung der Matrix zu Pulver,
- Sieben der Pulver,
- Herstellung der Pulver-Prepregs,
- Verpressen der Pulver-Prepregs zu Composite Sheets.

Als Prepreg für Composite Sheets bezeichnet man ein mit thermoplastischem Matrixmaterial vorimprägniertes, drapierfähiges Faserhalbzeug (z.B. Gewebe, Gelege, Vlies, o.Ä.).

Die Vermahlung des Granulates zu Pulver erfolgt durch den Einsatz geeigneter Mühlen. Häufig werden hierfür z.B. Stiftmühlen oder Schwingmühlen verwendet. Je nach Mühlenart können verschiedene Zerkleinerungsmechanismen den Prozess dominieren, wobei der Kunststoff zumeist durch Reibung oder Prallbeanspruchung zerkleinert wird. Für die Herstellung von faserverstärkten Halbzeugen (Composite Sheets) werden in der Regel technische Thermoplaste eingesetzt. Viele dieser technischen Thermoplaste (z.B. PA, PP, PC, PET, PEEK, PPS) weisen auch bei schlagartiger Belastung ein sehr duktiles Verhalten auf, was für den Vermahlprozess zur Folge hat, dass sich die Materialien verbiegen statt zu brechen oder aufgrund von Wärmeentwicklung sogar aufschmelzen können. Derartige Kunststoffe müssen bei der Vermahlung mit flüssigem Stickstoff oder $CO_2$ teilweise auf Temperaturen unter -196°C gekühlt werden, um bei der Vermahlung spröde zu brechen. Dieser zusätzliche Schritt der Kühlung ist für den Gesamtprozess mit hohen (Energie-)Kosten verbunden und verschlechtert die Wirtschaftlichkeit massiv.

Für die Herstellung von Pulverprepregs für Composite Sheets gemäß Stand der Technik sind Pulver mit bestimmten Komgrößenbereichen einzusetzen. Hierfür wird in einem der Vermahlung nachgeschalteten Schritt das erzeugte Pulver durch verschiedene Siebe klassifiziert. Bevorzugte Bereiche liegen sowohl von der Prozessausbeute als auch von der Verarbeitungseignung her zwischen 200 $\mu$m und 500 $\mu$m.

Anschließend wird der thermoplastische Kunststoff in Pulverform auf ein Fasergewebe, -gelege, - flies oder Ähnliches aufgetragen und durch Wärmezufuhr aufgeschmolzen. Durch die anschließende Abkühlung haftet der Kunststoff an der Faser und der Verbund ("Prepreg") kann aufgewickelt und später weiterverarbeitet werden.

Dabei wird durch eine Dosiereinrichtung bestimmt, wie viel Pulver auf das Fasergewebe aufgestreut wird. Dies entscheidet letztendlich über das Verhältnis zwischen Faser und Matrix beim späteren Composite Sheet. Typische Anlagen für die Dosierung sind beispielsweise die Streumaschinen der Firma Schilling-Knobel GmbH. Je nach Substrat bzw. Substratform oder - größe eignen sich unterschiedliche Maschinentypen.

Eine weitere Möglichkeit zur Herstellung der erfindungsgemäßen Composite Sheets bietet die "UD-Tape-Technologie" (siehe DE 102011005462 B3). Bei diesem Verfahren wird das Fasermaterial nicht in Form eines Faserhalbzeugs (Gewebe, Gelege, etc.), sondern direkt als Faserband (engl. Roving) eingesetzt. Für den Prozess werden in der Regel mehrere Rovingspulen parallel abgespult und zusammenlaufen gelassen, sodass sich ein flaches, breites Faserband ergibt. Je mehr Rovingspulen eingesetzt werden, desto breiter wird dieses Faserband. Die Breite kann dabei theoretisch nach Belieben eingestellt werden. Nachdem die Faserbänder zusammengeführt und gespreizt wurden, erfolgt der Auftrag des thermoplastischen Materials. Dieses kann entweder in Form von sehr feinem Pulver, als Folie oder direkt aus der Schmelze kommend auf das Faserband aufgetragen werden. Letztendlich ist das Ziel des Prozesses in allen Fällen, das Faserband vollständig mit dem thermoplastischen Material zu imprägnieren. Das daraus resultierende Halbzeug wird im Allgemeinen "UD-Tape" genannt.

In einem nachgeschalteten Schritt können diese "UD-Tapes" zu einem noch breiteren Tape zusammengefügt werden, wie in DE 10 2011 090143 A1 exemplarisch beschrieben. Dabei werden die einzelnen "UD-Tapes" parallel durch eine Heiz-Druck-Zone geführt und miteinander verschweißt. Anschließend werden diese Bänder in beliebiger Anordnung und Anzahl aufeinander geschichtet und zu dicken unidirektionalen Composite Sheets verpresst.

Erfindungsgemäße Faserverbundwerkstoffe sind insbesondere solche, aufweisend mindestens eine unidirektionale Faserlage aus einem Fasermaterial, die in eine auf einem thermoplastischen Kunststoff basierende Matrix eingebettet ist,

wobei die Zusammensetzung der Matrix enthält:

A) 60 - 95 Gew.-Teile aromatisches Polycarbonat,
B) 0 bis 15 Gew.-Teile kautschukmodifiziertes Pfropfpolymerisat,
C.3) 1 bis 25 Gew.-Teile eines Bisphenol A-bis(diphenylphosphats),
D) 0 bis 30 Gew.-Teile Talk mit einer mittleren Teilchengröße $d_{50}$ von 0,1 bis 20 μm,
E) 0,05 bis 5,00 Gew.-Teile Antidrippingmittel,
als Komponente G)
G.1) 0,01 bis 0,5 Gew.-Teile Thermostabilisatoren und/oder
G.2) 0,1 bis 1,5 Gew.-Teile Entformungsmittel,

wobei alle Gewichtsteilangaben vorzugsweise so normiert sind, dass die Summe der Gewichtsteile aller Komponenten A+B+C+D+E+G in der Zusammensetzung 100 ergibt.

Bevorzugt enthält die Zusammensetzung der Matrix keine weiteren Komponenten.

Erfindungsgemäße Faserverbundwerkstoffe werden zur Herstellung von Bauteilen für Schienenfahrzeuge verwendet, welche die Anforderungen an die Rauchgasentwicklung gemäß EN 45545 2 erfüllen.

Weitere Merkmale und Vorteile des Faserverbundwerkstoffs, seiner Verwendung und des Verfahrens zur Herstellung eines Faserverbundwerkstoffs ergeben sich aus der nachfolgenden Beschreibung mehrerer Ausführungsbeispiele, wobei auf die beigefügten Figuren Bezug genommen wird.

Es zeigen

Fig. 1 ein Composite Sheet als erstes Ausführungsbeispiel eines erfindungsgemäßen Verbundwerkstoffs,

Fig. 2 ein weiteres Composite Sheet als zweites Ausführungsbeispiel eines erfindungsgemäßen Verbundwerkstoffs und

Fig. 3 ein Ausführungsbeispiel für das erfindungsgemäße Verfahren zur Herstellung des Faserverbundwerkstoffs.

Figur 1 zeigt in seitlicher Schnittdarstellung ein Composite Sheet als erstes Ausführungsbeispiel eines erfindungsgemäßen Verbundwerkstoffs. Das Composite Sheet 2 umfasst eine oder mehrere übereinander gelegte Faserlagen 4 aus Glasfasergewebe, die in eine Matrix 8 aus thermoplastischem Kunststoff eingebettet sind.

Figur 2 zeigt in seitlicher Schnittdarstellung ein weiteres Composite Sheet als zweites Ausführungsbeispiel eines erfindungsgemäßen Verbundwerkstoffs. Das Composite Sheet 12 umfasst ein oder mehrere übereinander gelegte erste Faserlagen 14 und ein oder mehrere übereinander gelegte zweite Faserlagen 16, die in eine Matrix eingebettet sind, wobei die ersten und zweiten Faserlagen 14, 16 durch eine Schicht des Matrix-Materials voneinander getrennt sind.

Figur 3 zeigt in schematischer Darstellung ein Ausführungsbeispiel für das erfindungsgemäße Verfahren zur Herstellung des Faserverbundwerkstoffs. Bei dem Verfahren werden von einer ersten Haspel 22 eine bandförmige Faserlage 24 und von einer zweiten und dritten Haspel 26, 28 jeweils eine bandförmige Kunststofffolie 30, 32 abgewickelt. Mittels Führungswalzen 34 werden die Faserlage 24 und die Kunststofffolien 30, 32 zu einer Lagenstruktur 36 übereinander angeordnet und einer mittels Heizelementen 38 beheizten Doppelbandpresse 40 zugeführt. Anstelle einer Doppelbandpresse kann auch eine Intervallheizpresse verwendet werden. In der Doppelbandpresse 40 wird die Lagenstruktur 36 durch Druck- und Wärmeeinwirkung zu einem Faserverbundwerkstoff 42 gepresst. Die Temperaturen in der Doppelbandpresse 40 sind dabei so hoch, dass die Kunststofffolien 30, 32 der Lagenstruktur 36 zumindest teilweise verflüssigen und eine die Faserlage 24 einbettende Matrix bilden. Der als kontinuierliches Band 44 aus der Doppelbandpresse 40 austretende Faserverbundwerkstoff 42 kann anschließend einer Konfektioniereinrichtung 46 zugeführt werden, in der das Band 44 beispielsweise zu Composite Sheets 48 geschnitten wird.

Composite Sheets lassen sich weiterhin auch über eine statische Presse herstellen. Dabei werden Folien und Gewebelagen abwechselnd geschichtet, wobei Ober- und Unterseite des Composite Sheets jeweils durch eine Folienlage abgeschlossen werden.

## Beispiele:

Die folgenden Beispiele dienen der weiteren Erläuterung der Erfindung in Bezug auf die Zusammensetzung der Matrix:

### Komponente A1

Lineares Polycarbonat auf Basis Bisphenol A mit einer relativen Lösungsviskosität von $\eta_{rel}$ = 1,28, gemessen in $CH_2Cl_2$ als Lösungsmittel bei 25°C und einer Konzentration von 0,5 g/100 ml, bzw. lineares Polycarbonat auf Basis Bisphenol A mit einem gewichtsgemittelten Molekulargewicht $M_w$ von 27500 g/mol (bestimmt durch GPC in Dichlormethan mit Polycarbonat als Standard).

**Komponente A2**

Lineares Polycarbonat auf Basis Bisphenol A mit einer relativen Lösungsviskosität von $\eta_{rel}$ = 1,20, gemessen in $CH_2Cl_2$ als Lösungsmittel bei 25°C und einer Konzentration von 0,5 g/100 ml, bzw. lineares Polycarbonat auf Basis Bisphenol A mit einem gewichtsgemittelten Molekulargewicht $M_w$ von 20.000 g/mol (bestimmt durch GPC in Dichlormethan mit Polycarbonat als Standard).

**Komponente B.1**

ABS-Pfropfpolymerisat mit Kern-Schale-Struktur, hergestellt durch Emulsions-Polymerisation von 43 Gew.-%, bezogen auf das ABS-Polymerisat, einer Mischung aus 27 Gew.-% Acrylnitril und 73 Gew.-% Styrol in Gegenwart von 57 Gew.-%, bezogen auf das ABS-Polymerisat, eines teilchenförmig vernetzten Polybutadienkautschuks (mittlerer Teilchendurchmesser dso = 0,35 μm).

**Komponente C.3**

**Komponente C.3-1**

Bisphenol A-basierendes Oligophosphat mit 8,9 Gew.-% Phosphorgehalt.

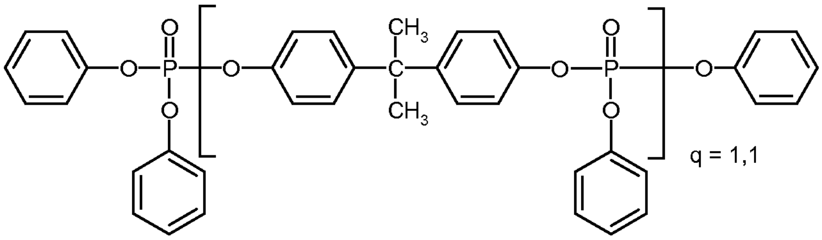

q = 1,1

**Komponente D1**

Talk, Jetfine 3CA der Firma Luzenac/Rio Tinto mit einem MgO-Gehalt von 32 Gew.-%, einem $SiO_2$-Gehalt von 61 Gew.-% und einem $Al_2O_3$-Gehalt von 0,3 Gew.-%, mittlere Teilchengröße dso = 1,0 μm.

**Komponente E1:**

Koagulierte Mischung von Emulsionen fluorierter Polyolefine mit Emulsionen eines Copolymerisats auf Styrol-Acrylnitril-Basis (Cycolac INP 449 der Firma Sabic)

**Komponente G1**

Pentaerythrittetrastearat als Gleit-/Entformungsmittel

**Komponente G2**

Thermostabilisator, Irganox® B900 (Gemisch aus 80% Irgafos® 168 und 20% Irganox® 1076; BASF AG; Ludwigshafen / Irgafos® 168 (Tris(2,4-di-tert-butyl-phenyl)-phosphit) / Irganox® 1076 (2,6-Di-tert-butyl-4-(octadecanoxycarbonylethyl)phenol)

**Herstellung und Prüfung der Spritzguss-Probekörper:**

Auf einem Zweischneckenextruder (ZSK-25) (Firma Werner und Pfleiderer) wurden die in Tabelle 2 aufgeführten Einsatzstoffe bei einer Drehzahl von 225 Upm und einem Durchsatz von 20 kg/h bei einer Maschinentemperatur von 260°C compoundiert und granuliert. Die fertigen Granulate wurden auf einer Spritzgussmaschine zu den entsprechenden Probekörpern verarbeitet (Massetemperatur 240°C, Werkzeugtemperatur 80°C, Einspritzgeschwindigkeit 40 mm/s).

**Die Herstellung der Composite Sheets wird im Folgenden beschrieben:**

Auf einem Zweischneckenextruder (ZSK-25) (Firma Werner und Pfleiderer) wurden die in Tabelle 2 aufgeführten Einsatzstoffe bei einer Drehzahl von 225 Upm und einem Durchsatz von 20 kg/h bei einer Maschinentemperatur von 260°C compoundiert und granuliert. In einem weiteren Prozessschritt wurden die Granulate dann mittels eines Einschneckenextruders mit Breitschlitzdüse zu Folien verarbeitet. Diese Folien wurden anschließend im Film-Stacking Verfahren gemäß den Prozessparametern in Tabelle 1 auf einer statischen Presse vom Typ Polystat 200T der Firma Servitec zu Composite Sheets weiterverarbeitet.

Zur Herstellung der Composite Sheets wurden Glasfasergewebe der Firma Schlösser & Cramer KG (Haan, Deutschland) vom Typ Style 3107 mit einem K506 Finish eingesetzt. Die Gewebe besitzen ein Flächengewicht von 390 g/m$^2$ bei einer Köper 2/2 Bindung. Dabei wurden Folien und Gewebelagen abwechselnd geschichtet, wobei Ober- und Unterseite des Composite Sheets jeweils durch eine Folienlage abgeschlossen wurde.

Tabelle 1:

| | **B1** | **B2** | **B3** | **B4** | **B5** | **B6** | **B7** | **B8** |
|---|---|---|---|---|---|---|---|---|
| Foliendicke [$\mu$m] | 125 | 125 | 125 | 125 | 125 | 125 | 125 | 125 |
| Folienlagen [Stk.] | 5 | 5 | 5 | 5 | 5 | 5 | 5 | 5 |
| Gewebelagen [Stk.] | 4 | 4 | 4 | 4 | 4 | 4 | 4 | 4 |
| Pressdruck [bar] | 50 | 50 | 50 | 50 | 50 | 50 | 50 | 50 |
| Presstemp. [°C] | 280 | 280 | 280 | 280 | 280 | 280 | 280 | 280 |
| Aufheizzeit [min] | 15 | 15 | 15 | 15 | 15 | 15 | 15 | 15 |
| Presszeit [min] | 5 | 5 | 5 | 5 | 5 | 5 | 5 | 5 |
| Abkühlzeit [min] | 8 | 8 | 8 | 8 | 8 | 8 | 8 | 8 |
| Entformungstemp. [°C] | 80 | 80 | 80 | 80 | 80 | 80 | 80 | 80 |

Die Rauchentwicklung **Ds(4)**, **VOF 4**, **Ds(max)** wurde entsprechend ISO 5659-2 (Bestrahlungsstärke: 50 kW/m$^2$, ohne Zündflamme) gemessen.

Das Brandverhalten wurde nach UL94 V an Stäben der Abmessung 127 x 12,7 x X mm (X = Dicke des Probenkörpers, d.h. 1 bzw. 2 mm) gemessen.

Die Zusammensetzungen sowie die Ergebnisse der Messungen sind in der folgenden Tabelle 2 zusammengestellt:

Tabelle 2:

| Jeweils in Gew.-% | **B1** | **B2** | **B3** | **B4** | **B5** | **B6** | **B7** | **B8** |
|---|---|---|---|---|---|---|---|---|
| A1 | 60,9 | 57,8 | 56,5 | 53,5 | 52,7 | 49,6 | 48,4 | 45,3 |
| A2 | 37,6 | 35,7 | 35,0 | 33,0 | 32,6 | 30,7 | 29,9 | 28,0 |
| B1 | 0 | 0 | 7 | 7 | 0 | 0 | 7 | 7 |
| C3.1 | 0 | 0 | 0 | 0 | 13,2 | 13,2 | 13,2 | 13,2 |
| D1 | 0 | 5 | 0 | 5 | 0 | 5 | 0 | 5 |
| E1 | 1 | 1 | 1 | 1 | 1 | 1 | 1 | 1 |
| PETS GI | 0,4 | 0,4 | 0,4 | 0,4 | 0,4 | 0,4 | 0,4 | 0,4 |
| G2 | 0,1 | 0,1 | 0,1 | 0,1 | 0,1 | 0,1 | 0,1 | 0,1 |
| **Brandverhalten (Spritzguss-Probekörper)** | | | | | | | | |
| UL 94 V/ 1 mm | | | | | | | | V-0 |
| UL 94 V/ 2 mm | | | | | | | | V-0 |

(fortgesetzt)

| Brandverhalten (Composite Sheet-Probekörper) | | | | | | | | |
|---|---|---|---|---|---|---|---|---|
| UL 94 V/ 1 mm | | | | | | | | n.b. |
| UL 94 V/ 2 mm | | | | | | | | n.b. |
| **Rauchentwicklung (EN ISO 5659-2: 50 KW $m^2$ / (Spritzguss-Probekörper, 2 mm Dicke))** | | | | | | | | |
| Ds (4) (Ziel für HL2: < 300) | 841 | 726 | >1300 | 732 | >1300 | 591 | >1300 | 783 |
| VOF4 (Ziel für HL2: < 600) | 1540 | 1266 | >1500 | 1537 | >1500 | 1245 | >1500 | 1635 |
| Ds (max) (Ziel für HL2: < 600) | 876 | 729 | >1300 | 736 | >1300 | 606 | >1300 | 783 |
| **Rauchentwicklung (EN ISO 5659-2: 50 KW $m^2$ / (Composite Sheet-Probekörper, 1 mm Dicke))** | | | | | | | | |
| Ds (4) (Ziel für HL2: < 300) | 307 | 348 | 389 | 334 | 260 | 265 | 275 | 260 |
| VOF4 (Ziel für HL2: < 600) | 633 | 611 | 677 | 740 | 420 | 494 | 551 | 581 |
| Ds (max) (Ziel für HL2: < 600) | 347 | 412 | 451 | 385 | 303 | 288 | 299 | 314 |
| Die Probekörper haben die Maße 75 mm x75 mm.<br>n.b.: nicht bestanden | | | | | | | | |

Aus der Tabelle 2 geht hervor, dass Spritzguss-Probekörper, hergestellt aus den Zusammensetzungen gemäß den Beispielen B1 bis B4 ohne Flammschutzmittel (C3-1), unabhängig von der Anwesenheit von Talk und/oder Komponente B1 die Anforderung an die Rauchentwicklung nicht erfüllen. Weiterhin erfüllen Composite Sheets, hergestellt aus den Zusammensetzungen gemäß den Beispielen B1 bis B4, die kein Flammschutzmittel C3-1 enthalten, unabhängig vom Zusatz von Talk und/oder Komponente B1 ebenfalls nicht die Anforderung an die Rauchentwicklung gemäß EN 45545 2, das sind:

| | |
|---|---|
| Ds(4) nach ISO 5659-2: | < 300, |
| VOF 4 nach ISO 5659-2: | < 600 und |
| Ds(max) nach ISO 5659-2: | < 600. |

Es zeigt sich sogar, dass Spritzkörper aus Zusammensetzungen, die Komponente C3-1 als Flammschutzmittel enthalten (B5 bis B8), eine deutlich schlechtere Rauchentwicklung aufweisen als Spritzkörper aus Zusammensetzungen, die kein Flammschutzmittel enthalten (B1 bis B4). Überraschenderweise erfüllen jedoch Composite Sheets aus den Zusammensetzungen B5 bis B8 die Anforderungen an die Rauchentwicklung. Dieses ist umso überraschender, als das Brandverhalten nicht auf die Rauchgasentwicklung schließen lässt. So erfüllen Spritzgusskörper, hergestellt aus der Zusammensetzung B8, selbst bei 1 mm Dicke des Probekörpers die Anforderungen von UL 94 -V0, wohingegen entsprechende Composite-Sheet-Probekörper, auch bei 2 mm Dicke, den UL 94-Test nicht bestehen.

## Patentansprüche

**1.** Faserverbundwerkstoff (42),
aufweisend mindestens eine Faserlage (4, 14, 16) aus einem Fasermaterial, die in eine auf einem thermoplastischen Kunststoff basierende Matrix (8, 18) eingebettet ist,
wobei die Zusammensetzung der Matrix (8, 18) enthält:

A) 60 - 95 Gew.-Teile aromatisches Polycarbonat und/oder aromatisches Polyestercarbonat,
B) 0 bis 15 Gew.-Teile kautschukmodifiziertes Pfropfpolymerisat,
C) ein Phosphor-haltiges Flammschutzmittel,
D) 0 bis 30 Gew.-Teile Talk mit einer mittleren Teilchengröße $d_{50}$ von 0,1 bis 20 $\mu$m,
**dadurch gekennzeichnet, dass**
das Phosphor-haltige Flammschutzmittel eine der Komponenten C.1, C.2 oder C.3 in der jeweils nachfolgend genannten Zusammensetzung und Menge ist:

C.1) 1,0 - 14,5 Gew.-Teile mindestens eines cyclischen Phosphazens gemäß Formel (X)

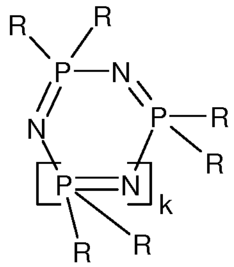

(X),

wobei

R jeweils gleich oder verschieden ist und für einen Aminrest, jeweils gegebenenfalls halogeniertes, vorzugsweise mit Fluor halogeniertes, $C_1$- bis $C_8$-Alkyl, vorzugsweise Methyl, Ethyl, Propyl oder Butyl, $C_1$- bis $C_8$- Alkoxy, vorzugsweise Methoxy, Ethoxy, Propoxy oder Butoxy, jeweils gegebenenfalls durch Alkyl, vorzugsweise $C_1$- bis $C_4$-Alkyl, und/oder Halogen, vorzugsweise Chlor und/oder Brom, substituiertes $C_5$- bis $C_6$-Cycloalkyl, jeweils gegebenenfalls durch Alkyl, vorzugsweise $C_1$- bis $C_4$-Alkyl, und/oder Halogen, vorzugsweise Chlor, Brom und/oder Hydroxy-substituiertes, $C_6$- bis $C_{20}$-Aryloxy, vorzugsweise Phenoxy, Naphthyloxy, jeweils gegebenenfalls durch Alkyl, vorzugsweise $C_1$- bis $C_4$-Alkyl, und/oder Halogen, vorzugsweise Chlor und/oder Brom, substituiertes $C_7$- bis $C_{12}$-Aralkyl, vorzugsweise Phenyl-$C_1$- bis -$C_4$-alkyl, oder einen Halogen-Rest, vorzugsweise Chlor, oder einen OH-Rest steht.

k für 1 oder eine ganze Zahl von 1 bis 10, vorzugsweise für eine Zahl von 1 bis 8, besonders bevorzugt 1 bis 5, steht, wobei der Trimerenanteil (k=1) von 50 bis 98 mol-%, bezogen auf die Komponente C.1, beträgt,

C.2) 0,1 bis 30 Gew.-Teile eines Salzes einer Phosphinsäure,
C.3) 1 bis 25 Gew.-Teile eines oligomeren Phosphats, insbesondere eines Bisphenol A-bis(diphenylphosphats),

und dass die Zusammensetzung der Matrix (8, 18)
E) 0,05 bis 5,00 Gew.-Teile Antidrippingmittel enthält,
wobei alle Gewichtsteilangaben vorzugsweise so normiert sind, dass die Summe der Gewichtsteile aller Komponenten A+B+C+D+E in der Zusammensetzung 100 ergibt.

**2.** Faserverbundwerkstoff (42) nach Anspruch 1, wobei die Zusammensetzung der Matrix (8, 18) weiterhin enthält:

F) 0 - 15,0 Gew.-Teile Vinyl(Co)Polymerisat oder Polyalkylenterephthalat,
G) 0 - 15,0 Gew.-Teile Additive,
wobei alle Gewichtsteilangaben vorzugsweise so normiert sind, dass die Summe der Gewichtsteile aller Komponenten A+B+C+D+E+F+G in der Zusammensetzung 100 ergibt.

**3.** Faserverbundwerkstoff (42) nach Anspruch 1 oder 2, wobei, die Zusammensetzung der Matrix (8, 18) enthält:
C.3) 7.0 bis 16.0 Gew.-Teile eines oligomeren Phosphats.

**4.** Faserverbundwerkstoff (42) nach einem der Ansprüche 1 bis 3, wobei Pfropfpolymerisate B Pfropfpolymerisate umfassen aus:

B.1) 5 bis 95, vorzugsweise 30 bis 80 Gew.-Teile, einer Mischung aus

B.1.1)50 bis 95 Gew.-Teilen Styrol, α-Methylstyrol, methylkernsubstituiertem Styrol, $C_1$- bis $C_8$-Alkylmethacrylat, insbesondere Methylmethacrylat, $C_1$- bis $C_8$-Alkylacrylat, insbesondere Methylacrylat, oder Mischungen dieser Verbindungen und
B.1.2)5 bis 50 Gew.-Teilen Acrylnitril, Methacrylnitril, $C_1$- bis $C_8$-Alkylmethacrylaten, insbesondere Methylmethacrylat, $C_1$- bis $C_8$-Alkylacrylat, insbesondere Methylacrylat, Maleinsäureanhydrid, $C_1$- bis $C_4$-alkyl- bzw. -phenyl-N-substituierte Maleinimiden oder Mischungen dieser Verbindungen auf

B.2) 5 bis 95, vorzugsweise 20 bis 70 Gew.-Teilen einer kautschukhaltigen Pfropfgrundlage, ausgewählt aus

Butadienkautschuken, Acrylatkauctschuken und Silikonacrylatkautschuken.

**5.** Faserverbundwerkstoff (42) nach einem der Ansprüche 1 bis 4, **dadurch gekennzeichnet, dass** die Faserlage (4, 14, 16) als unidirektionale Faserlage, als Gewebe- oder Gelegelage, als Gestrick, Gewirk oder Geflecht oder als Langfaser in Form von Wirrfasermatten oder Vliesen oder als Kombination daraus ausgebildet ist.

**6.** Faserverbundwerkstoff (42) nach einem der Ansprüche 1 bis 5, **dadurch gekennzeichnet, dass** das Fasermaterial Fasern aus einer oder mehreren der folgenden Faserarten umfasst: Glasfasern, Carbonfasern, Basaltfasern, Aramidfasern, Liquid-crystal-Polymer-Fasern, Polyphenylensulfid-Fasern, Polyetherketon-Fasern, Polyetheretherketon-Fasern, Polyetherimid-Fasern.

**7.** Faserverbundwerkstoff (42) nach einem der Ansprüche 1 bis 6, **dadurch gekennzeichnet, dass** der Volumengehalt des Fasermaterials am Gesamtvolumen des Faserverbundwerkstoffs im Bereich 30 bis 60 Vol.-%, bevorzugt im Bereich 40 bis 55 Vol.-%, liegt.

**8.** Faserverbundwerkstoff (42) nach einem der Ansprüche 1 bis 7, **dadurch gekennzeichnet, dass** der Faserverbundwerkstoff in Form eines Faserverbundblechs (2, 12, 48) vorliegt.

**9.** Faserverbundwerkstoff (42) nach Anspruch 8, **dadurch gekennzeichnet, dass** das Faserverbund-blech (2, 12, 48) eine Dicke im Bereich von 0,5 bis 3 mm, bevorzugt von 1 bis 2 mm aufweist.

**10.** Faserverbundwerkstoff (42) nach einem der Ansprüche 1 bis 9, **dadurch gekennzeichnet, dass** der Faserverbundwerkstoff (42) bzw. das Faserverbundblech folgende Eigenschaften aufweist:

| | |
|---|---|
| Ds(4) nach ISO 5659-2: | < 300, |
| VOF 4 nach ISO 5659-2: | < 600 und |
| Ds(max) nach ISO 5659-2: | < 600. |

**11.** Verwendung eines Faserverbundwerkstoffs nach einem der Ansprüche 1 bis 10 für ein Bauteil für ein Schienenfahrzeug, insbesondere für ein Schienenfahrzeug für den Personentransport.

**12.** Verfahren zur Herstellung eines Faserverbundwerkstoffs nach einem der Ansprüche 1 bis 10,

- bei dem aus mindestens einer Faserlage (4, 14, 16) aus einem Fasermaterial und aus auf beiden Seiten der Faserlage (4, 14, 16) angeordneten Kunststofflagen aus mindestens einer Kunststofffolie (30) eine Lagenstruktur (36) übereinander angeordneter Lagen gebildet wird und
- bei dem die Lagenstruktur (36) unter Druck- und Wärmeeinwirkung zu einem Faserverbundwerkstoff (42) gepresst wird,
- wobei die Kunststofffolie (30) eine der Matrix (8, 18) des Faserverbundwerkstoffs nach einem der Ansprüche 1 bis 10 entsprechende Zusammensetzung aufweist.

## Claims

**1.** Fibre composite (42),
having at least one fibre layer (4, 14, 16) of a fibre material which is embedded in a matrix (8, 18) based on a thermoplastic, where the composition of the matrix (8, 18) contains:

A) 60-95 parts by weight of aromatic polycarbonate and/or aromatic polyester carbonate,
B) from 0 to 15 parts by weight of rubber-modified graft polymer,
C) a phosphorus-containing flame retardant,
D) from 0 to 30 parts by weight of talc having an average particle size $d_{50}$ of from 0.1 to 20 $\mu$m,
**characterized in that**
the phosphorus-containing flame retardant is one of the components C.1, C.2 or C.3 having the composition and amount
indicated in each case below:

C.1)1.0-14.5 parts by weight of at least one cyclic phosphazene of the formula (X),

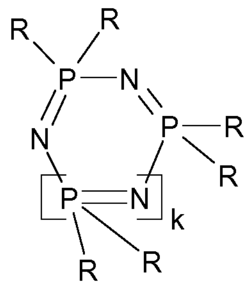

(X),

where
the radicals

R are identical or different and are each an amine radical, in each case optionally halogenated, preferably fluorinated, $C_1$-$C_8$-alkyl, preferably methyl, ethyl, propyl or butyl, $C_1$-$C_8$-alkoxy, preferably methoxy, ethoxy, propoxy or butoxy, $C_5$-$C_6$-cycloalkyl in each case optionally substituted by alkyl, preferably $C_1$-$C_4$-alkyl, and/or halogen, preferably chlorine and/or bromine, $C_6$-$C_{20}$-aryloxy in each case optionally substituted by alkyl, preferably $C_1$-$C_4$-alkyl, and/or halogen, preferably chlorine, bromine, and/or hydroxy, preferably phenoxy, naphthyloxy, $C_7$-$C_{12}$-aralkyl in each case optionally substituted by alkyl, preferably $C_1$-$C_4$-alkyl, and/or halogen, preferably chlorine and/or bromine, preferably phenyl-$C_1$-$C_4$-alkyl, or a halogen radical, preferably chlorine, or an OH radical;
k is 1 or an integer from 1 to 10, preferably a number from 1 to 8, particularly preferably from 1 to 5, where the proportion of trimer (k = 1) is from 50 to 98 mol% based on the component C.1,

C.2) from 0.1 to 30 parts by weight of a salt of a phosphinic acid,
C.3) from 1 to 25 parts by weight of an oligomeric phosphate, in particular a bisphenol A bis(diphenylphosphate),

E) from 0.05 to 5.00 parts by weight of antidripping agent,
where all parts by weight indicated are preferably normalized so that the sum of the parts by weight of all components A+B+C+D+E in the composition is 100.

**2.** Fibre composite (42) according to Claim 1, wherein the composition of the matrix (8, 18) additionally contains:

F) 0 - 15.0 parts by weight of vinyl (co)polymer or polyalkylene terephthalate,
G) 0 - 15.0 parts by weight of additives,
where all parts by weight indicated are preferably normalized so that the sum of the parts by weight of all components A+B+C+D+E+F+G in the composition is 100.

**3.** Fibre composite (42) according to Claim 1 or 2, wherein the composition of the matrix (8, 18) contains:
C.3) from 7.0 to 16.0 parts by weight of an oligomeric phosphate.

**4.** Fibre composite (42) according to any of Claims 1 to 3, wherein graft polymers B comprise graft polymers composed of:

B.1) from 5 to 95 parts by weight, preferably from 30 to 80 parts by weight, of a mixture of

B.1.1) from 50 to 95 parts by weight of styrene, α-methylstyrene, methyl-ring-substituted styrene, $C_1$-$C_8$-alkyl methacrylate, in particular methyl methacrylate, $C_1$-$C_8$-alkyl acrylate, in particular methyl acrylate, or mixtures of these compounds and
B.1.2) from 5 to 50 parts by weight of acrylonitrile, methacrylonitrile, $C_1$-$C_8$-alkyl methacrylates, in particular methyl methacrylate, $C_1$-$C_8$-alkyl acrylate, in particular methyl acrylate, maleic anhydride, $C_1$-$C_4$-alkyl- or -phenyl-N-substituted maleimide or mixtures of these compounds on

B.2) from 5 to 95 parts by weight, preferably from 20 to 70 parts by weight, of a rubber-containing graft base selected from among butadiene rubbers, acrylate rubbers and silicone-acrylate rubbers.

**5.** Fibre composite (42) according to any of Claims 1 to 4, **characterized in that** the fibre layer (4, 14, 16) is configured as unidirectional fibre layer, as woven or lay-up layer, as drawn-loop knit, formed-loop knit or braid, or as long fibres in the form of tangled fibre mats or nonwovens or as a combination thereof.

**6.** Fibre composite (42) according to any of Claims 1 to 5, **characterized in that** the fibre material comprises fibres of one or more of the following types of fibre: glass fibres, carbon fibres, basalt fibres, aramid fibres, liquid crystal polymer fibres, polyphenylene sulphide fibres, polyether ketone fibres, polyether ether ketone fibres, polyetherimide fibres.

**7.** Fibre composite (42) according to any of Claims 1 to 6, **characterized in that** the volume content of the fibre material based on the total volume of the fibre composite is in the range from 30 to 60% by volume, preferably in the range from 40 to 55% by volume.

**8.** Fibre composite (42) according to any of Claims 1 to 7, **characterized in that** the fibre composite is in the form of a fibre composite sheet (2, 12, 48).

**9.** Fibre composite (42) according to Claim 8, **characterized in that** the fibre composite sheet (2, 12, 48) has a thickness in the range from 0.5 to 3 mm, preferably from 1 to 2 mm.

**10.** Fibre composite (42) according to any of Claims 1 to 9, **characterized in that** the fibre composite (42) or the fibre composite sheet has the following properties:

| | |
|---|---|
| Ds(4) in accordance with ISO 5659-2: | < 300, |
| VOF 4 in accordance with ISO 5659-2: | < 600 and |
| Ds(max) in accordance with ISO 5659-2: | < 600. |

**11.** Use of a fibre composite according to any of Claims 1 to 10 for a component for a rail vehicle, in particular for a rail vehicle for transporting passengers.

**12.** Process for producing a fibre composite according to any of Claims 1 to 10,

- wherein a layer structure (36) made up of superposed layers is formed from at least one fibre layer (4, 14, 16) of a fibre material and from polymer layers composed of at least one polymer film (30) arranged on both sides of the fibre layer (4, 14, 16) and
- in which the layer structure (36) is pressed under applied pressure and the action of heat to form a fibre composite (42),
- where the polymer film (30) has a composition corresponding to the matrix (8, 18) of the fibre composite according to any of Claims 1 to 10.

## Revendications

**1.** Matériau composite renforcé de fibres (42), comportant au moins une couche de fibres (4, 14, 16) constituée d'un matériau fibreux, qui est noyée dans une matrice (8, 18) à base d'un matériau synthétique thermoplastique, la composition de la matrice (8, 18) contenant :

A) 60 à 95 parties en poids de polycarbonate aromatique et/ou de polyester carbonate aromatique,
B) 0 à 15 parties en poids de polymère greffé modifié par du caoutchouc,
C) un retardateur de flamme contenant du phosphore,
D) 0 à 30 parties en poids de talc présentant une granulométrie moyenne $d_{50}$ de 0,1 à 20 $\mu$m,
**caractérisé en ce que** le retardateur de flamme contenant du phosphore est l'un des composants C.1, C.2 ou C.3 présentant la composition et la quantité respectivement indiquées ci-dessous :

C.1) 1,0 - 14,5 parties en poids d'au moins un phosphazène cyclique répondant à la formule (X)

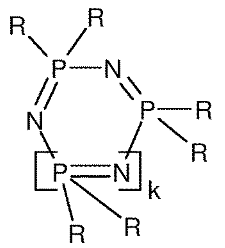

(X),

dans laquelle

R est respectivement identique ou différent et représente un radical amine, un alkyle en $C_1$ à $C_8$, de préférence un méthyle, un éthyle, un propyle ou un butyle, dans chaque cas éventuellement halogéné, de préférence halogéné par du fluor, un alcoxy en $C_1$ à $C_8$, de préférence un méthoxy, un éthoxy, un propoxy ou un butoxy, un cycloalkyle en $C_5$ à $C_6$, dans chaque cas éventuellement substitué par un alkyle, de préférence un alkyle en $C_1$ à $C_4$ et/ou un halogène, de préférence le chlore et/ou le brome, un aryloxy en $C_6$ à $C_{20}$, de préférence un phénoxy, un naphthyloxy, dans chaque cas éventuellement substitué par un alkyle, de préférence un alkyle en $C_1$ à $C_4$, et/ou un halogène, de préférence le chlore, le brome et/ou un hydroxy, un aralkyle en $C_7$ à $C_{12}$, de préférence un phényl-alkyle en $C_1$ à $C_4$, dans chaque cas éventuellement substitué par un alkyle, de préférence un alkyle en $C_1$ à $C_4$, et/ou un halogène, de préférence le chlore et/ou le brome, ou un radical halogène, de préférence le chlore, ou un radical OH,
k est égal à 1 ou à un nombre entier de 1 à 10, de préférence un nombre de 1 à 8, et plus préférablement de 1 à 5,
dans lequel la fraction trimère (k=1) est de 50 à 98 % en moles, par rapport au composant C.1,

C.2) 0,1 à 30 parties en poids d'un sel d'acide phosphinique,
C.3) 1 à 25 parties en poids d'un phosphate oligomère, en particulier d'un bisphénol A-bis(diphénylphosphate), et **en ce que** la composition de la matrice (8, 18) contient

E) 0,05 à 5,00 parties en poids d'agent antigouttage, toutes les données relatives aux parties en poids étant de préférence normalisées de manière à ce que la somme des parties en poids de tous les constituants A+B+C+D+E de la composition soit égale à 100.

**2.** Matériau composite renforcé de fibres (42) selon la revendication 1, dans lequel la composition de la matrice (8, 18) contient en outre :

F) 0 à 15,0 parties en poids de (co)polymère vinylique ou de téréphtalate de polyalkylène,
G) 0 à 15,0 parties en poids d'additifs, toutes les données relatives aux parties en poids étant de préférence normalisées de manière à ce que la somme des parties en poids de tous les composants A+B+C+D+E+F+G de la composition soit égale à 100.

**3.** Matériau composite renforcé de fibres (42) selon la revendication 1 ou 2, dans lequel la composition de la matrice (8, 18) contient :
C.3) 7,0 à 16,0 parties en poids d'un phosphate oligomère.

**4.** Matériau composite renforcé de fibres (42) selon l'une quelconque des revendications 1 à 3, dans lequel les polymères greffés comprennent des polymères greffés B choisis parmi :

B.1) 5 à 95, de préférence 30 à 80 parties en poids, d'un mélange de

B.1.1) 50 à 95 parties en poids de styrène, d'a-méthylstyrène, de styrène substitué par un noyau méthyle, de méthacrylate d'alkyle en $C_1$ à $C_8$, en particulier de méthacrylate de méthyle, d'acrylate d'alkyle en $C_1$ à $C_8$, en particulier d'acrylate de méthyle ou de mélanges de ces composés et
B.1.2) de 5 à 50 parties en poids d'acrylonitrile, de méthacrylonitrile, de méthacrylates d'alkyle en $C_1$ à $C_8$, en particulier de méthacrylate de méthyle, d'acrylate d'alkyle en $C_1$ à $C_8$, en particulier d'acrylate de méthyle,

d'anhydride d'acide maléique, de maléimides N-substitués par un alkyle ou un phényle en $C_1$ à $C_4$ ou des mélanges de ces composés sur

B.2) 5 à 95, de préférence 20 à 70 parties en poids, d'un support de greffe contenant un caoutchouc choisi parmi des caoutchoucs de butadiène, des caoutchoucs d'acrylate et des caoutchoucs de silicone acrylate.

**5.** Matériau composite renforcé de fibres (42) selon l'une quelconque des revendications 1 à 4, **caractérisé en ce que** la couche de fibres (4, 14, 16) est réalisée sous la forme d'une couche fibreuse unidirectionnelle, sous la forme d'une nappe tissée ou de canevas, d'un tricot, d'un tissu à mailles, d'un treillis, ou sous la forme de fibres longues présentant la forme de mats de fibres aléatoires ou de non-tissés ou d'une combinaison de ceux-ci.

**6.** Matériau composite renforcé de fibres (42) selon l'une quelconque des revendications 1 à 5, **caractérisé en ce que** le matériau fibreux comprend des fibres d'un ou plusieurs des types de fibres suivants : des fibres de verre, des fibres de carbone, des fibres de basalte, des fibres d'aramide, des fibres de polymère de cristaux liquides, des fibres de sulfure de polyphénylène, des fibres de polyéthercétone, des fibres de polyétheréthercétone et des fibres de polyétherimide.

**7.** Matériau composite renforcé de fibres (42) selon l'une quelconque des revendications 1 à 6, **caractérisé en ce que** la teneur en volume du matériau fibreux par rapport au volume total du matériau composite renforcé de fibres est comprise entre 30 et 60% en volume, de préférence entre 40 et 55% en volume.

**8.** Matériau composite renforcé de fibres (42) selon l'une quelconque des revendications 1 à 7, **caractérisé en ce que** le matériau composite renforcé de fibres se présente sous la forme d'une feuille composite renforcée de fibres (2, 12, 48).

**9.** Matériau composite renforcé de fibres (42) selon la revendication 8, **caractérisé en ce que** la feuille composite renforcée de fibres (2, 12, 48) présente une épaisseur comprise entre 0,5 et 3 mm, de préférence de 1 à 2 mm.

**10.** Matériau composite renforcé de fibres (42) selon l'une quelconque des revendications 1 à 9, **caractérisé en ce que** le matériau composite renforcé de fibres (42) ou la feuille composite renforcée de fibres présente les propriétés suivantes :

| | |
|---|---|
| Ds(4) selon ISO 5659-2 : | < 300, |
| VOF 4 selon ISO 5659-2 : | < 600 et < 600 |
| Ds(max) selon ISO 5659-2 : | < 600. |

**11.** Utilisation d'un matériau composite renforcé de fibres selon l'une quelconque des revendications 1 à 10 pour un composant d'un véhicule ferroviaire, en particulier pour un véhicule ferroviaire destiné au transport de personnes.

**12.** Procédé de fabrication d'un matériau composite renforcé de fibres selon l'une quelconque des revendications 1 à 10,

- dans lequel une structure en couches (36) de couches superposées les unes aux autres est formée à partir d'au moins une couche de fibres (4, 14, 16) constituée d'un matériau fibreux et de couches de matière plastique disposées sur les deux faces de la couche de fibres (4, 14, 16) et constituées d'au moins un film plastique (30), et
- dans lequel la structure en couches (36) est comprimée sous l'action de la pression et de la chaleur pour former un matériau composite renforcé de fibres (42),
- dans lequel le film plastique (30) présente une composition correspondant à la matrice (8, 18) du matériau composite renforcé de fibres selon l'une quelconque des revendications 1 à 10.

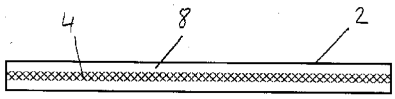


Fig. 1

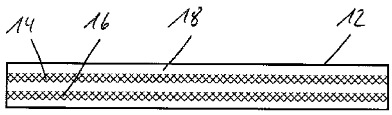


Fig. 2

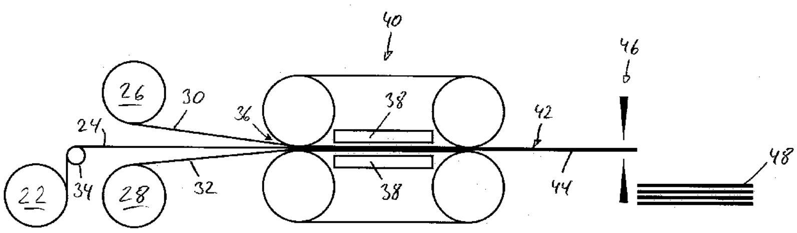


Fig. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 2948235 C2
- JP 2005239939 A
- DE 102007016698 A1
- DE AS1495626 B
- DE 2232877 A
- DE 2703376 A
- DE 2714544 A
- DE 3000610 A
- DE 3832396 A
- DE 3007934 A
- DE 2842005 A
- US 3419634 A
- DE 3334782 A
- DE 2940024 A
- DE OS2035390 A
- US PS3644574 A
- DE OS2248242 A
- GB PS1409275 A
- DE OS1694173 A
- US PS3564077 A
- DE OS2348377 A
- US PS3919353 A
- DE 3704657
- DE 3704655
- DE 3631540
- DE 3631539
- EP 728811 A
- DE 1961668 A
- WO 9740092 A1
- EP 0363608 A
- EP 0640655 A
- US PS3671487 A
- US 3723373 A
- US 3838092 A
- US 2393967 A
- DE 2407674 A
- DE 2407776
- DE 2715932
- DE 1900270 A
- US 3692744 A
- DE 102011005462 B3
- DE 102011090143 A1


### In der Beschreibung aufgeführte Nicht-Patentliteratur


- **SCHNELL.** Chemistry and Physics of Polycarbonates. Interscience Publishers, 1964
- **HOUBEN-WEYL.** Methoden der Organischen Chemie. Georg Thieme-Verlag, 1961, vol. 14/1, 393-406
- **C.B. BUCKNALL.** Toughened Plastics. Appl. Science Publishers, 1977
- Ullmanns, Enzyklopädie der Technischen Chemie. 1980, vol. 19, 280 ff
- **W. SCHOLTAN ; H. LANGE.** *Kolloid, Z. und Z. Polymere,* 1972, vol. 250, 782-796
- Ullmanns Enzyklopädie der technischen Chemie. 1979, vol. 18, 301 ff
- **HOUBEN-WEYL.** Methoden der organischen Chemie. vol. 12/1, 43
- **SCHILDKNECHT.** Vinyl and Related Polymers. John Wiley & Sons, Inc, 1962, 484-494
- **WALL.** Fluorpolymers. Wiley-Interscience, John Wiley & Sons, Inc, 1970, vol. 13, 623-654
- Modern Plastics Encyclopedia. Mc Graw-Hill, Inc, Oktober 1970, vol. 47, 134, , 774
- Modern Plastics Encyclopedia. Mc Graw-Hill, Inc, Oktober 1975, vol. 52, 27, , 28, , 472
- Kunststoff-Handbuch. Karl-Hanser-Verlag, 1973, vol. VIII, 695 FF